(19) Europäisches Patentamt
European Patent Office
Office européen des brevets

(11) **EP 3 064 559 A1**

(12) **EUROPEAN PATENT APPLICATION**
published in accordance with Art. 153(4) EPC

(43) Date of publication:
**07.09.2016 Bulletin 2016/36**

(21) Application number: **14857747.1**

(22) Date of filing: **01.10.2014**

(51) Int Cl.:
*C09J 7/02* $^{(2006.01)}$    *C09J 11/06* $^{(2006.01)}$
*C09J 133/00* $^{(2006.01)}$

(86) International application number:
**PCT/JP2014/076265**

(87) International publication number:
**WO 2015/064283 (07.05.2015 Gazette 2015/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.10.2013 JP 2013224665**

(71) Applicant: **Nitto Denko Corporation**
**Ibaraki-shi, Osaka 567-8680 (JP)**

(72) Inventors:
• **UKEI, Natsuki**
**Ibaraki-shi**
**Osaka 567-8680 (JP)**

• **NISHIMURA, Izumi**
**Ibaraki-shi**
**Osaka 567-8680 (JP)**
• **MATSUMOTO, Chie**
**Ibaraki-shi**
**Osaka 567-8680 (JP)**
• **OKADA, Mika**
**Ibaraki-shi**
**Osaka 567-8680 (JP)**
• **MARUOKA, Nobuaki**
**Ibaraki-shi**
**Osaka 567-8680 (JP)**

(74) Representative: **Grünecker Patent- und**
**Rechtsanwälte**
**PartG mbB**
**Leopoldstraße 4**
**80802 München (DE)**

(54) **SURFACE-PROTECTING SHEET**

(57) This invention provides a surface protection sheet that allows for easy application to an adherend surface with good removability. The surface protection sheet provided by this invention comprises a PSA layer and a support substrate supporting the PSA layer. The surface protection sheet has a peel strength ($S_A$) after adhered to a stainless steel plate and stored at 23 °C for 30 minutes, and a peel strength ($S_B$) after adhered on a stainless steel plate and stored at 70 °C for 168 hours, at a peel strength ratio ($S_B/S_A$) of 5 or less. The surface protection sheet has a peel strength to itself of 5 N/25mm or less when the PSA layer is adhered to itself and peeled apart after one minute.

[Fig. 1]

EP 3 064 559 A1

**Description**

[Technical Field]

The present invention relates to a surface protection sheet. The present application claims priority to Japanese Patent Application No. 2013-224665 filed on October 29, 2013; and the entire contents of this application is incorporated herein by reference.

[Background Art]

For purposes such as prevention of surface damage in transporting, storing, aging and constructing articles (e.g. painted automobiles and their components, or metal plates such as steel plates and molded articles therefrom), techniques are known such as adhering protection sheets to the surfaces for protection. A surface protection sheet used for such purposes is generally constructed to have a pressure-sensitive adhesive (PSA) layer on one face of a substrate sheet (support substrate) so that it can provide protection when adhered via the PSA layer to a surface of an adherend(an object to be protected). Technical literatures related to surface protection sheets include Patent Documents I to 3. Patent Document 4 is a technical document related to a removable PSA.

[Citation List]

[Patent Literature]

[Patent Document 1] Japanese Patent Application Publication No. H6-73352
[Patent Document 2] Japanese Patent Application Publication No. 2007-532744
[Patent Document 3] Japanese Patent Application Publication No. 2012-25921
[Patent Document 4] Japanese Patent Application Publication No. H10-114887

[Summary of Invention]

[Technical Problem]

After serving the protective role, surface protection sheets are removed (released) from adherends. Thus, surface protection sheets require properties that allow removal from adherends without leaving residue of the surface protection sheets. For instance, abilities to not leave PSA on adherend surfaces (anti-residue properties) are required. When not properly adhered on adhered surfaces, surface protection sheets may not always sufficiently exhibit their true protective abilities. For example, if a surface protection sheet includes wrinkles or areas where it is not adhered to the adherend surface, rainwater may get in from there, possibly causing issues such as degrading surface quality of the adherend, increased likelihood of leaving adhesion marks on the adherend surface (marking).

An objective of this invention is thus to provide a surface protection sheet that allows for easy application to an adherend surface with good removability.

This description provides a surface protection sheet that comprises a PSA layer and a support substrate supporting the PSA layer. The surface protection sheet has a peel strength ($S_A$) after adhered to a stainless steel plate and stored at 23 °C for 30 minutes (or "initial peel strength ($S_A$)" hereinafter) and a peel strength ($S_B$) after adhered on a stainless steel plate and stored at 70 °C for 168 hours (or "aged peel strength ($S_B$)" hereinafter) at an initial to aged peel strength ratio ($S_B/S_A$) of 5 or less. The surface protection sheet has a peel strength to itself of 5N/25mm or less when the PSA layer is adhered to itself and peeled apart after one minute.

The surface protection sheet with peel strength ratio ($S_B/S_A$) at or below 5 yields only a small increase in peel strength when aged. Thus, when removed from the adherend after its protective role is over, it is less likely to cause leftover adhesive residue on the adherend surface. The small increase in peel strength upon aging is preferable also from the standpoint of the ease of removing the surface protection sheet from the adherend. The surface protection sheet also has low peel strength to itself. Thus, for instance, when the PSA layer sticks to itself while the surface protection sheet is being applied to the adherend, even if the stuck part is peeled apart again, the PSA layer is less susceptible to damage. This facilitates proper application of the surface protection sheet to the adherend.

From the standpoint of the anti-residue properties, etc., the aged peel strength ($S_B$) is preferably 10 N/25mm or less. This is advantageous also from the standpoint of the ease of removing the surface protection sheet.

From the standpoint of facilitating the reapplication of the surface protection sheet to the adherend, etc., the initial peel strength ($S_A$) is preferably 10 N/25mm or less.

In a preferable embodiment of the surface protection sheet disclosed herein, the initial peel strength ($S_A$) and the aged peel strength ($S_B$) of the surface protection sheet are both 10 N/25mm or less.

The surface protection sheet disclosed herein preferably has a tack energy of 0.60 mJ or less. In such a surface protection sheet, the PSA layer surface is low tack. Thus, when the surface protection sheet is applied to an adherend, for instance, it is easy to redo the application. This may facilitate proper application of the surface protection sheet to the adherend.

The base polymer forming the PSA layer is preferably crosslinked. The surface protection sheet having such a PSA layer is likely to show suitable peel strength to itself. It is also advantageous from the standpoint of the anti-residue properties. Crosslinks in the base polymer may be introduced, for instance, by using one, two or more species selected from a group consisting of oxazoline-based crosslinking agents, isocyanate-based crosslinking agents and epoxy-based crosslinking agents.

The PSA layer of the surface protection sheet disclosed herein preferably comprises an acrylic polymer as the base polymer. With the use of the acrylic polymer as the base polymer, the surface protection sheet may be favorably obtained, combining the peel strength to itself and peel strength ratio ($S_B/S_A$) disclosed herein.

Water-dispersed PSA compositions comprising adhesive components in an aqueous solvent are preferable from the standpoint of reducing environmental stress because they use water as their dispersion media of the adhesive components. They are also advantageous from the standpoint of reducing volatile organic compounds (VOC) released from PSA sheets formed with these. Lately, water-dispersed PSA compositions tend to be preferred as PSA compositions for forming PSA layers of surface protection sheets such as described above. The surface protection sheet disclosed herein can be preferably implemented in an embodiment where the PSA layer is formed with a water-dispersed PSA composition. A favorable example of the water-dispersed PSA composition is a water-dispersed (emulsion-type) PSA composition comprising an acrylic polymer and a crosslinking agent in an aqueous solvent.

As the crosslinking agent, one, two or more species selected from a group consisting of oxazoline-based crosslinking agents, isocyanate-based crosslinking agents and epoxy-based crosslinking agents can be preferably used. With the use of such a crosslinking agent, the PSA layer can be favorably formed with the peel strength ratio ($S_B/S_A$) in a suitable range.

[Brief Description of Drawings]

Fig. 1 shows a cross-sectional diagram schematically illustrating an embodiment of the surface protection sheet according to this invention.

Fig. 2 shows a side view schematically illustrating a test piece used in measurement of peel strength to itself.

Fig. 3 shows a diagram schematically illustrating the method for measuring peel strength to itself.

[Description of Embodiments]

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

As used herein, the "base polymer" of a PSA refers to a component that accounts for 50 % by weight or more (typically 70 % by weight or more) of rubbery polymer in the PSA. The rubbery polymer refers to a polymer that shows rubber elasticity in a room temperature range.

As used herein, the term "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively.

As used herein, the term "acrylic monomer" refers to a monomer having at least one (meth)acryloyl group per molecule. In this description, the term "acrylic polymer" refers to a polymer comprising a monomer unit derived from an acrylic monomer. Typical examples of the acrylic polymer include a polymer in which an acrylic monomer accounts for 50 % by weight or more of the monomers (all monomers) corresponding to the composition of the acrylic polymer.

<Surface Protection Sheet>

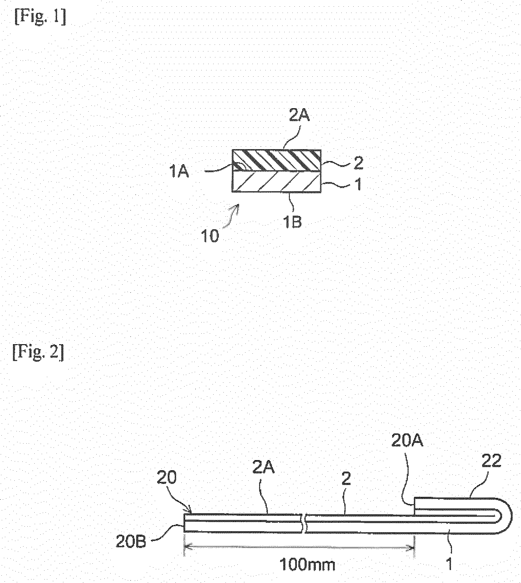

Fig. 1 shows a cross-sectional structure of the surface protection sheet according to an embodiment of the present invention. Surface protection sheet 10 comprises a support substrate 1 and a PSA layer 2 provided on its first face 1A (front face). When used, it is adhered over a surface 2A of PSA layer 2 to an adherend.

Prior to use (i.e. before adhered to the adherend), surface protection sheet 10 is in a form where the surface 2A (adhesive face, i.e. the bonding surface to the adherend) of PSA layer 2 is protected with a release liner (not shown in the drawing) having a release face at least on the PSA layer-side surface. Surface protection sheet 10 may be in a form where, with the other surface (back face) 1B of support substrate 1 being a release face, surface protection sheet 10 is wound in a roll so that the other face comes in contact with the PSA layer 2 to protect the surface (adhesive face) 2A.

<Peel Strength to Itself>

The surface protection sheet disclosed herein is characterized by having a peel strength to itself of 5 N/25mm or less when the PSA layer is adhered to itself and peeled apart after one minute. In particular, the peel strength to itself is measured based on the measurement method for peel strength to itself described later in Examples.

As for a surface protection sheet with high peel strength to itself, when the PSA layer is caused to stick to itself by mishandling, etc., even if the corresponding segments are peeled apart and applied to an adherend, proper application tends to be difficult to achieve. For instance, when being peeled apart, debonding may occur not at the interface between the PSA layer segments, but between the PSA layer segment on one side and the support substrate (anchoring failure), transferring (leaving) the PSA layer segment on this side onto the PSA layer segment on the other side. The area where the anchoring failure is located lacks the PSA layer on the support substrate and thus cannot be bonded to the adherend surface. Thus, wrinkling of the surface protection sheet occurs in this area, allowing potential infiltration of rainwater from there. While such an absence of the PSA layer occurs, the PSA layer is partially folded in the surface protection sheet, making the surface protection sheet thickness uneven. This may also cause degradation of the protective abilities. Furthermore, the presence and absence of the PSA layer as well as the uneven thickness may cause the stress exerted by the surface protection sheet on the adherend surface (e.g. paint film) to vary from area to area, thereby promoting marking of the adherend surface.

By keeping the peel strength of the surface protection sheet to itself at or below 5 N/25mm, when peeling the stuck segments of the PSA layer apart, the PSA layer is less susceptible to such damage. Thus, even if the PSA layer sticks to itself in an area of the surface protection sheet, degradation (wrinkling, etc.) of the quality of adhesion can be reduced to provide good protection. This is significant also in view of being able to avoid trouble and waste such as disposing the stuck surface protection sheet and redoing the procedure with a new surface protection sheet.

From the standpoint of preventing damage to the PSA layer better, the peel strength to itself is preferably 4.5 N/25mm or less, more preferably 4 N/25mm or less, yet more preferably 3 N/25mm or less, or particularly preferably 2.5 N/25mm or less. The minimum peel strength to itself is not particularly limited. In view of the balance with other properties, it is usually suitably 0.5 N/25mm or greater.

The peel strength to itself can be adjusted, for instance, by the type of base polymer and its monomer composition, by the degree of crosslinking (which can be determined, e.g. by the gel fraction, etc., described later), by the molecular structure of the base polymer, by the molecular weight (e.g. weight average molecular weight) of the solvent-soluble portion of the PSA layer, by the low molecular weight content of the PSA layer, by the use of filler, and so on. In typical, increasing the crosslinking degree of the base polymer, using a monomer with a larger pendant group, increasing the weight average molecular weight of the solvent-soluble portion of the PSA layer, reducing the low molecular weight content (e.g. tackifier, plasticizer, softening agent, etc.), and adding filler to the PSA layer can be all individually effective means to reduce the peel strength to itself.

<Peel Strength Ratio ($S_B/S_A$)>

The surface protection sheet disclosed herein preferably has a peel strength ratio ($S_B/S_A$) of 5 or less, which is defined as the ratio of aged peel strength ($S_B$) to initial peel strength ($S_A$). The initial peel strength ($S_A$) and aged peel strength ($S_B$) are measured based on the method described later in Examples. From the measurement values of these, the peel strength ratio ($S_B/S_A$) can be determined.

The surface protection sheet with peel strength ratio ($S_B/S_A$) at or below 5 yields only a small increase in peel strength when aged. Thus, when removed from the adherend after its protective role is over, it is less likely to cause leftover adhesive residue on the adherend surface. The small increase in peel strength upon aging is preferable also from the standpoint of the ease of removing the surface protection sheet from the adherend. For instance, the surface protection sheet can be removed with less force to reduce the load on workers.

From the standpoint of obtaining the effect to a greater extent, the peel strength ratio ($S_B/S_A$) is more preferably 4.5 or less, or yet more preferably 4 or less (e.g. 3.5 or less).

From the standpoint of facilitating its reapplication when being adhered to an adherend, the surface protection sheet disclosed herein has an initial peel strength ($S_A$) of preferably 10 N/25mm or less, more preferably 8 N/25mm or less, or yet more preferably 7 N/25mm or less. The minimum initial peel strength ($S_A$) is not particularly limited. From the standpoint of preventing events such as wind-caused peeling of the surface protection sheet, it is usually preferably 0.5 N/25mm or greater.

From the standpoint of the anti-residue properties, ease of removal and so on, the surface protection sheet disclosed herein has an aged peel strength ($S_B$) of suitably 15 N/25mm or less, preferably 10 N/25mm or less, more preferably 8 N/25mm or less, or yet more preferably 7 N/25mm or less. The minimum aged peel strength ($S_B$) is not particularly limited. It is usually preferably 0.5 N/25mm or greater.

In a preferable embodiment of the surface protection sheet disclosed herein, the initial peel strength ($S_A$) and aged peel strength ($S_B$) of the surface protection sheet are both 10 N/25mm or less (more preferably 8 N/25mm or less, yet more preferably 7 N/25mm or less).

At least in measurement of the aged peel strength ($S_B$), it is preferable that the surface protection sheet disclosed herein peels at the interface between the PSA layer and adherend (stainless steel). In other words, a surface protection sheet that does not cause cohesive failure or anchoring failure in the aged peel strength ($S_B$) measurement is preferable. The surface protection sheet with such a property may be less likely to leave adhesive residue on the adherend. A particularly preferable surface protection sheet peels at the interface between the PSA layer and adherend both in the aged peel strength ($S_B$) measurement and in the initial peel strength ($S_A$) measurement.

Factors that influence the initial peel strength ($S_A$), aged peel strength ($S_B$) and peel strength ratio ($S_B/S_A$) are described where appropriate in the following. Some typical means that can be used to adjust these specific values can be figured out by a person ordinarily skilled in the art based on the disclosures of this description and technical common knowledge.

<Tack Energy>

When the application of the surface protection sheet results in failure such as wrong positioning, it is beneficial to be able to immediately remove the surface protection sheet from the adherend and apply (i.e. reapply) the same surface protection sheet to the adherend again to, for instance, modify the positioning where it is applied. Even when redoing the application, if degradation of the quality of adhesion can be reduced to provide good protection, it is possible to avoid trouble and waste such as disposing the failed surface protection sheet and redoing the procedure with a new surface protection sheet.

From the standpoint of facilitating the reapplication, the surface protection sheet disclosed herein preferably has a tack energy of 0.60 mJ or less. The tack energy can be measured by carrying out a probe tack test with respect to the adhesive face (i.e. the PSA layer surface) of the surface protection sheet. In particular, tack energy is measured based on the tack energy measurement method described later in Examples.

With the low tack energy, the surface protection sheet tends to be less susceptible to wrinkling when removing the surface protection sheet immediately after failed application. Because of this, even if the surface protection sheet is removed and then applied again, the quality of adhesion is less likely to degrade and the reapplication is facilitated. From the standpoint of facilitating the reapplication, the tack energy is preferably 0.55 mJ or less, more preferably 0.50 mJ or less, or yet more preferably 0.45 mJ or less. In a preferable embodiment, the tack energy may be 0.25 mJ or less, or even 0.20 mJ or less.

The minimum tack energy is not particularly limited. From the standpoint of facilitating its positioning when applying, the tack energy is usually preferably 0.05 mJ or greater, more preferably 0.10 mJ or greater, or yet more preferably 0.15 mJ or greater (e.g. 0.17 mJ or greater).

The tack energy can be adjusted, for instance, by the type of base polymer and its monomer composition, by the degree of crosslinking (which can be determined, e.g. by the gel fraction, etc., described later), by the molecular structure of the base polymer, by the molecular weight (e.g. weight average molecular weight) of the solvent-soluble portion of the PSA layer, by the low molecular weight content of the PSA layer, by the use of filler, and so on. In typical, increasing the crosslinking degree of the base polymer, using a monomer with a larger pendant group, increasing the weight average molecular weight of the solvent-soluble portion of the PSA layer, reducing the low molecular weight content (e.g. tackifier, plasticizer, softening agent, etc.), and adding filler to the PSA layer can be all individually effective means to lower the tack energy.

<Probe Tack>

From the standpoint of facilitating the reapplication, the surface protection sheet disclosed herein preferably has a probe tack of 4.0 N or less. Probe tack can be measured by conducting a probe tack test with respect to the adhesive face of the surface protection sheet. In particular, probe tack is measured based on the probe tack measurement method described later in Examples. In view of facilitating the reapplication, the probe tack is preferably 3.5 N or less (e.g. less than 3.5 N). The minimum probe tack is not particularly limited. From the standpoint of facilitating its positioning when applying, the probe tack is usually preferably 2.0 N or greater, more preferably 2.5 N or greater, or yet more preferably 2.7 N or greater. The probe tack can be adjusted, for instance, by the same factors as with the tack energy described above.

Although not particularly limited to this, the surface protection sheet disclosed herein can be preferably implemented in an embodiment where the ratio of the tack energy value E (mJ) to the probe tack value T (N), i.e. E/T, is 0.15 or less. Herein, T and E refer to the probe tack value in units of newton (N) and the tack energy value in units of mJ, respectively, with T and E themselves being dimensionless quantities (unit-less quantities).

When the PSA layer has low cohesiveness, in the load curve obtainable by the probe tack test described later, the peak corresponding to the probe tack tends to be followed by a long tail. When the tail following the peak of the load curve is long, the E/T value tends to be large. Thus, from the standpoint of obtaining cohesiveness suited for surface protection sheets (e.g. suited for exhibiting anti-residue properties), it is advantageous that the E/T value is not far too large. In a preferable embodiment of the art disclosed herein, the E/T value can be 0.13 or less, 0.10 or less, or even 0.07 or less (e.g. below 0.07). The minimum E/T value is not particularly limited. It is usually 0.02 or greater, typically 0.05 or greater. The E/T value can be adjusted, for instance, by the same factors as with the tack energy described above.

<Support Substrate>

As the support substrate of the surface protection sheet disclosed herein, can be used a resin film, paper, fabric, a rubber sheet, a foam sheet, metal foil, a composite of these, or the like. Examples of resin films include polyolefin (polyethylene, polypropylene, ethylene-propylene copolymers, etc.) resin films, polyester resin films, vinyl chloride resin films, vinyl acetate resin films, polyimide resin films, polyamide resin films, fluorinated resin films, cellophane, and the like. Examples of paper include Washi paper, kraft paper, glassine paper, high grade paper, synthetic paper, top-coated paper and the like. Examples of fabrics include woven fabrics and non-woven fabrics, etc., of a single species or a blend of various fibrous substances. Examples of fibrous substances include cotton, staple fiber, Manila hemp, pulp, rayon, acetate fibers, polyester fibers, polyvinyl alcohol fibers, polyamide fibers, polyolefin fibers, and the like. Examples of rubber sheets include natural rubber sheets, butyl rubber sheets, and the like. Examples of foam sheets include polyurethane foam sheets, polychloroprene foam sheets, and the like. Examples of metal foil include aluminum foil, copper foil, and the like.

The art disclosed herein can be applied preferably to a surface protection sheet using as its support substrate a resin sheet primarily comprising a resin content such as polyolefin, polyester (e.g., polyethylene terephthalate (PET)), or the like. Here, the resin sheet can be a resin film formed of (molded from) a composition primarily comprising a resin content such as exemplified above. The resin sheet is typically a non-porous resin film. The "non-porous resin film" here should be conceptually distinguished from the so-called non-woven and woven fabric (i.e., meaning to exclude non-woven and woven fabric).

An especially preferable application may be a surface protection sheet wherein the primary component of the resin content constituting the support substrate is a polyolefin-based resin. For instance, a preferable surface protection sheet comprises, as the support substrate or as a component of the support substrate, a plastic film (polyolefin resin film) formed by molding a sheet of a polyolefin resin material comprising one, two or more species selected from a group consisting of polyethylene (PE) resins and polypropylene (PP) resins at 50 % by weight or more in total.

[Polyolefin Resin]

The PP resin can be various types of polymer comprising propylene (propylene-based polymer). A preferable PP resin comprises propylene accounting for 20 % by weight or more of all the monomers.

For instance, the concept of PP resin regarded herein includes the following propylene-based polymers.

Propylene homopolymer (homopolypropylene) such as isotactic polypropylene, syndiotactic polypropylene and atactic polypropylene;

Random copolymer (random polypropylene) of propylene and other $\alpha$-olefin(s); typically, random copolymer of propylene and one, two or more species selected from ethylene and $\alpha$-olefins having 4 to 10 carbon atoms; preferably random copolymer formed from propylene as the primary monomer (a main monomer, i.e. a component accounting for 50 % by weight or more of all monomers, the same applies hereinafter); for instance, a random copolymer of 96 to 99.9 % (by mole) propylene and 0.1 to 4 % (by mole) other $\alpha$-olefin(s) (preferably ethylene and/or butene).

Copolymer (block polypropylene) obtained by block copolymerization of propylene and other $\alpha$-olefin(s); typically, copolymer obtained by block copolymerization of propylene and one, two or more species selected from ethylene and $\alpha$-olefins having 4 to 10 carbon atoms; preferably, a block polypropylene formed from polypropylene as the primary monomer, typically further comprising as a by-product a rubber formed from at least one among propylene and the other $\alpha$-olefin(s); for instance, a block polypropylene comprising a block copolymer of 90 to 99.9 % (by mole) propylene and 0.1 to 10 % (by mole) other $\alpha$-olefin(s) (preferably ethylene and/or butene) and further comprising as a by-product a rubber formed from at least one among propylene and the other $\alpha$-olefin(s);

Copolymer of propylene and a monomer (functional monomer) having another functional group in addition to a polymerizing functional group; and copolymer of such a functional monomer and a propylene-based polymer.

The PP resin can be formed essentially of one, two or more species of such propylene-based polymer, or can be a thermoplastic olefin resin (TPO) or a thermoplastic elastomer (TPE) of a reactor blend type obtainable by copolymerizing a propylene-based polymer with a large amount of a rubber component, or of a dry blend type obtainable by mechanically dispersing the rubber component in a propylene-based polymer. Alternatively, it can be a PP resin comprising a copolymer of propylene and other monomer(s) (functional monomer) containing other functional group(s) in addition to a polymerizing functional group, a PP resin obtained by copolymerizing such a functional monomer with a propylene-based polymer, or the like.

The PE resin can be various types of polymer comprising ethylene (ethylene-based polymer). A preferable PE resin comprises ethylene accounting for more than 50 % by weight of all the monomers.

The ethylene-based polymer can be an ethylene homopolymer or a copolymer (random copolymer, block copolymer, etc.) of ethylene and other monomer(s). Favorable examples of the other monomer include $\alpha$-olefins having 3 to 10 carbon atoms such as propylene, 1-butene (which can be a branched 1-butene), 1-hexene, 4-methyl-1-pentene and 1-octene. It can be a copolymer of ethylene and a monomer (functional monomer) containing other functional group(s) in addition to a polymerizable functional group, copolymer of such a functional monomer and an ethylene-based polymer, or the like. Examples of a copolymer of ethylene and a functional monomer include ethylene-vinyl acetate copolymers (EVA), ethylene-acrylic acid copolymers (EAA), ethylene-methacrylic acid copolymers (EMAA), ethylene-methyl acrylate copolymers (EMA), ethylene-ethyl acrylate copolymers (EEA), ethylene-methyl methacrylate copolymers (EMMA), and copolymers of ethylene and (meth)acrylic acid (i.e. acrylic acid and/or methacrylic acid) crosslinked by metal ions.

Examples of the PE resin include a high density polyethylene (HDPE), medium density polyethylene (MDPE), low density polyethylene (LDPE) and linear low density polyethylene (LLPDE). The density of the PE resin is not particularly limited, and it can be, for instance, about 0.9 g/cm$^3$ to 0.94 g/cm$^3$. Examples of preferable polyethylene resins include LDPE and LLDPE.

The polyolefin resin material preferably comprises at least a PP resin as the polyolefin resin. For example, a preferable support substrate has a composition comprising 20 % by weight or more (preferably 30 % by weight or more) PP resin. Such a support substrate may be superior in terms of heat resistance, size stability, etc., as compared to, for instance, a support substrate having a composition whose resin content is essentially formed of PE resin. It is also advantageous from the standpoint of the handling properties of the surface protection sheet, etc. This is particularly meaningful in an application where the surface protection sheet is expected to be applied or removed in an environment exposed to wind (e.g. in the outdoors).

As the support substrate of the surface protection sheet disclosed herein, it is preferable to use a polyolefin resin film in which a continuous structure (continuous phase) ofPP resin is formed. With the surface protection sheet having such a support substrate, it is easier to prevent lifting of the surface protection sheet from the adherend surface caused by a thermal history such as temperature elevation of the adherend (object to be protected). In other words, it exhibits good anti-lifting properties. Thus, there are fewer chances of degradation of protection performance caused by the lifting and peeling of the surface protection sheet with the lifting being the starting point.

The support substrate may have a mono-layer structure or a multi-layer structure including two, three or more layers. When it has a layered structure, it is preferable that at least one layer comprises a continuous PP resin phase.

The polyolefin resin material may further comprise, as the resin content, other non-polyolefin resin(s). The optional resin component can be one, two or more species selected from, for instance, polyester resins such as polyethylene terephthalate (PET), polyamide resins, polycarbonate resins, polyurethane resins and acrylic resins. When these other non-polyolefin resins are used, their amounts used are not particularly limited. Usually, of the resin content in the support substrate, they account for suitably 40 % by weight or less, preferably 30 % by weight or less, more preferably 20 % by weight or less, or yet more preferably 10 % by weight or less. The art disclosed herein can be preferably implemented in an embodiment where the resin content is essentially formed of polyolefin resin (e.g. in an embodiment wherein 95 % by weight or more, or typically 98 % by weight or more of the resin content is polyolefin resin).

A preferable polyolefin resin material may be, but not particularly limited to, a resin material having a MFR (melt flow rate) in a range of approximately 0.5 g/10min to 80 g/10min (e.g., 0.5 g/10min to 10 g/10min). Herein, the MFR refers to the value measured by method A at a temperature of 230 °C and an applied load of 21.18 N based on JIS K 7210.

[Inorganic Powder]

The support substrate can comprise an inorganic powder. For instance, a preferable support substrate comprises a resin content and an inorganic powder. The support substrate having such a composition can block lights such as UV rays with the inorganic powder and inhibit photodegradation of the surface protection sheet (the PSA layer and/or the support substrate itself). This is preferable from the standpoint of the anti-residue properties and preventing the tearing of the surface protection sheet during its removal

As the inorganic powder, oxides such as titanium dioxide, zinc oxide, magnesium oxide, alumina and silica; carbonates such as calcium carbonate; sulfates such as barium sulfate; and the like can be used. An inorganic powder capable of coloring the support substrate in white is preferable. According to the white surface protection sheet, for instance, temperature elevation of the adherend by sunlight irradiation can be reduced, whereby peel strength increase during the course of protection can be minimized to a greater extent. This can bring about a surface protection sheet with greater anti-residue properties.

A favorable example of the inorganic powder is titanium dioxide ($TiO_2$). The type of titanium dioxide is not particularly limited. For instance, titanium dioxide in any crystal form such as rutile, anatase and brookite can be used. In particular, rutile titanium dioxide is preferable. Titanium dioxide having coated particle surfaces can be used as well. The coating material of the titanium dioxide particles is not particularly limited. For instance, it can be an inorganic oxide such as silica, alumina and zinc oxide. Favorable examples include highly weather-resistant titanium dioxide (typically rutile titanium dioxide) having particle surfaces coated with $Si-Al_2O_3$, etc.

The average particle diameter of the inorganic powder is not particularly limited. From the standpoint of obtaining good light-blocking effects, the average particle diameter of the inorganic powder is preferably 150 nm or larger, or more preferably 180 nm or larger. On the other hand, from the standpoint of the dispersibility in the resin content, the average particle diameter of the inorganic powder is preferably 500 nm or smaller, or more preferably 400 nm or smaller.

From the standpoint of obtaining good light-blocking effects, the inorganic powder content in the support substrate is suitably 5 % by weight or more of the entire support substrate, preferably 6 % by weight or more, or more preferably 7 % by weight or more. In view of the strength and ease of molding of the support substrate, etc., the inorganic powder content is suitably 30 % by weight or less of the entire support substrate, preferably 20 % by weight or less, or more preferably 15 % by weight or less. For instance, it is preferable to use a support substrate comprising an inorganic powder at such a ratio with the rest being formed of the resin content.

To the support substrate, as necessary, known additives that can be used in support substrates for plastic films for PSA sheet support substrates can be suitably added, such as weatherability enhancers (UV absorber, antioxidant, photostabilizer, etc.), antistatic agent and slip agent. Examples of photostabilizer include those containing benzotriazoles, hindered amines and benzoates as active ingredients. Examples of antioxidant include those containing alkylphenols, alkylene bisphenols, thiopropionic acid esters, organic phosphorous acid esters, amines, hydroquinones and hydroxylamines as active ingredients. These additives can be used solely as one species or in a combination of two or more species. The amounts of additives added can be about the same as usual amounts in plastic films for PSA sheet support substrates.

The thickness of the support substrate is not particularly limited and can be suitably selected in accordance with the purpose. For instance, a support substrate having a thickness of about 300 μm or less can be used. From the standpoint of the conformability to the adherend surface contour, etc., the thickness of the substrate can be, for instance, 200 μm or less, or it is suitably 100 μm or less, preferably 70 μm or less, or more preferably 50 μm or less. With decreasing thickness of the support substrate, the PSA layer tends to be more likely to stick to itself during its handling. Thus, it is more significant to apply the art disclosed herein to facilitate the separation of the PSA layer segments stuck to each other as described above. From such a standpoint, the thickness of the support substrate can be 45 μm or less, or even 40 μm or less (e.g. less than 40 μm).

The thickness of the support substrate can be, for instance, 10 μm or greater. From the standpoint of the strength and handling properties, it is suitably 15 5 μm or greater, preferably 20 μm or greater, more preferably 25 μm or greater, or yet more preferably 30 μm or greater. For instance, the thickness of the support substrate comprising 20 % by weight or more PP resin can be preferably selected in a range of 15 μm to 50 μm (preferably 20 μm to 45 μm, more preferably 25 μm to 40 μm). With such a support substrate, the surface protection sheet can be obtained, combining surface conformability and handling properties at a particularly high level.

The support substrate may be obtained by a heretofore known method by molding a sheet from a resin material that comprises a resin component, an inorganic powder and other materials (additives, etc.) used as necessary. For example, the support substrate can be produced by suitably employing a heretofore known general film-forming method such as extrusion molding and inflation molding.

Of the support substrate, the face on the side to which the PSA layer is provided (PSA layer-side surface) may be subjected to a known or commonly used surface treatment such as corona discharge treatment, plasma treatment, UV ray irradiation, acid treatment, alkali treatment and primer coating. Such a surface treatment may increase the adhesion between the support substrate and the PSA layer, that is, the anchoring of the PSA layer to the support substrate. It is preferable to apply a surface treatment so as to introduce a polar group such as hydroxy group (-OH) to the PSA layer-side surface of the support substrate. This can increase the anchoring of the PSA layer and further increase the anti-residue properties of the surface protection sheet. It is preferable to increase the anchoring of the PSA layer also from the standpoint of increasing the ease of application. For instance, it may prevent damage to the PSA layer better when separating the PSA layer segments stuck to each other.

The other face (back face) of the support substrate which is opposite from the PSA layer-side surface may be subjected, as necessary, to a surface treatment such as antistatic treatment, release treatment and water repellent treatment. The release treatment provided to the back face of the support substrate brings about effects such as facilitated unwinding of the surface protection sheet wound in a roll, etc.

<PSA Composition>

There are not particular limitations to the type of PSA constituting the PSA layer in the surface protection sheet disclosed herein. For instance, the PSA layer may be formed to comprise one, two or more species selected among various known types of PSA such as acrylic PSA, rubber-based PSA (such as natural rubber-based PSA, synthetic rubber-based PSA, PSA as a mixture of these), silicone-based PSA, polyester-based PSA, urethane-based PSA, polyether-based PSA, polyamide-based PSA and fluorine-based PSA. Here, the acrylic PSA refers to a PSA comprising an acrylic polymer as the base polymer. The same applies to the rubber-based PSA and other PSA.

The base polymer is preferably crosslinked. By crosslinking the base polymer, the peel strength of the PSA layer to itself can be adjusted to (typically suppressed to be within) a suitable range. It is advantageous to crosslink the base polymer also from the standpoint of the anti-residue properties. It is also effective as a means to adjust the initial peel strength ($S_A$) to a suitable range.

In crosslinking the base polymer, various types of crosslinking agents normally used in the PSA field can be suitably selected and used by common methods. Specific examples of the crosslinking agent include isocyanate-based crosslinking agents, silane-based crosslinking agents, epoxy-based crosslinking agents, oxazoline-based crosslinking agents, aziridine-based crosslinking agents, and metal chelate-based crosslinking agents. These can be used solely one species or a combination of two or more species. For instance, it is preferable to use one, two or more species selected from a group consisting of oxazoline-based crosslinking agents, isocyanate-based crosslinking agents and epoxy-based crosslinking agents.

The form of the PSA composition used for forming the PSA layer is not particularly limited. The PSA composition can be in various forms such as a solvent-based PSA composition containing the PSA (adhesive component(s)) in an organic solvent, an aqueous PSA composition containing the PSA dissolved or dispersed in an aqueous solvent, an active energy ray-curable PSA composition formulated so as to cure with active energy rays such as UV rays and radioactive rays to form PSA, and a hot-melt PSA composition which is applied in the molten state by heating and forms PSA when it cools to near room temperature.

From the standpoint of reducing environmental stress and VOC, an aqueous PSA composition can be preferably used. Favorable examples of the aqueous PSA composition include a water-dispersed PSA composition comprising an acrylic polymer as the base polymer (i.e., water-dispersed acrylic PSA composition). As an example of the PSA composition suited for forming the PSA layer of the surface protection sheet disclosed herein, a water-dispersed acrylic PSA composition is described below. However, the PSA layer is not to be limited to those formed from the water-dispersed acrylic PSA composition.

The water-dispersed acrylic PSA composition favorably comprises as the base polymer an acrylic polymer obtainable by emulsion polymerization of a starting monomer mixture comprising an acrylic monomer. The acrylic polymer typically has a copolymerization ratio corresponding to the composition of the monomer content in the starting monomer mixture.

[Monomer A]

The starting monomer mixture preferably comprises as the monomer A an alkyl (meth)acrylate represented by the next general formula (1):

$$CH_2=C(R^1)COOR^2 \qquad (1)$$

Herein, $R^1$ in the formula (1) is a hydrogen atom or a methyl group. $R^2$ is an acrylic alkyl group having 1 to 20 carbon atoms. Hereinafter, such a range of the number of carbon atoms may be indicated as "$C_{1-20}$." From the standpoint of the polymerization reactivity and stability of emulsion polymerization, etc., an alkyl (meth)acrylate wherein $R^2$ is a $C_{1-6}$ alkyl group is preferable, and an alkyl (meth)acrylate wherein $R^2$ is a $C_{1-12}$ alkyl group is more preferable.

Examples of an alkyl (meth)acrylate with $R^2$ being a $C_{1-20}$ alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-buyl (meth)acrylate, pentyl (meth)acrylate, isopentyl (meth)acrylate, hexyl (meth)acrylate, heptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. These alkyl (meth)acrylates can be used solely as one species or in a combination of two or more species.

[Monomer B]

The starting monomer mixture preferably comprises as the monomer B a carboxy group-containing monomer. The monomer B may be useful to introduce crosslinking points in the acrylic polymer or to increase the cohesiveness of the acrylic polymer. The monomer B may contribute to increase the anti-residue properties by increasing the tightness of adhesion (anchoring) of the PSA layer to the support substrate. Examples of carboxy group-containing monomers include ethylenic unsaturated monocarboxylic acids such as acrylic acid, methacrylic acid, crotonic acid, isocrotonic acid, carboxyethyl (meth)acrylate, carboxypentyl (meth)acrylate and 1-[2-(methacryloyloxy)ethyl]succinic acid; ethylenic unsaturated dicarboxylic acids such as maleic acid, fumaric acid, itaconic acid and citraconic acid as well as their anhydrides (e.g. maleic acid anhydride, itaconic acid anhydride). For the carboxy group-containing monomer, solely one species or a combination of two or more species can be used.

[Monomer C]

The starting monomer mixture may comprise other monomer(s) (monomer C) besides the monomers A and B. As the monomer C, solely one species or a combination of two or more species can be used.
Examples of compounds that can be used as the monomer C may include functional monomers such as those described below. These functional monomers may be useful for introducing crosslinking points into the acrylic polymer or for increasing the cohesiveness of the acrylic polymer.
Hydroxy group-containing monomers: e.g. hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)methyl acrylate; unsaturated alcohols such as vinyl alcohol and allyl alcohol;
Amide group-containing monomers: e.g. (meth)acrylamide; N,N-dialkyl(meth)acrylamides such as N,N-dimethyl(meth)acrylamide, N.N-diethyl(meth)acrylamide and N,N-dimethylaminopropyl(meth)acrylamide; N-monoalkyl(meth)acrylamides such as N-propyl(meth)acrylamides including N-isopropyl(meth)acrylamide and N-n-propyl(meth)acrylamide and N-butyl(meth)acrylamides including N-t-butyl (meth)acrylamide and N-n-butyl(meth)acrylamide; N-methylol(meth)acrylamide, N-methylolpropane (meth)acrylamide, N-methoxymethyl (meth)acrylamide, N-butoxymethyl (meth)acrylamide, diacetone (meth)acrylamide;
Imide group-containing monomers: e.g. N-isopropylmaleimide, N-cyclohexylmaleimide, itaconimide;
Amino group-containing monomers: e.g. aminoethyl (meth)acrylate, N,N-dimethylaminoethyl (meth)acrylate, N,N-dimethylaminopropyl (meth)acrylate, t-butylaminoethyl (meth)acrylate;
Epoxy group-containing monomers: e.g. glycidyl (meth)acrylate, methylglycidyl (meth)acrylate, allyl glycidyl ether;
Cyano group-containing monomers: e.g. acrylonitrile, methacrylonitrile;
Keto group-containing monomers: e.g. diacetone (meth)acrylamide, diacetone (meth)acrylate, vinyl methyl ketone, vinyl ethyl ketone, allyl acetoacetate, vinyl acetoacetate;
Monomers having nitrogen atom-containing rings: e.g. N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloyl morpholine, N-(meth)acryloylpyrrolidone;
Alkoxysilyl group-containing monomers: e.g. (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane.
Other examples of the compound that can be used as the monomer C include vinyl ester-based monomers such as vinyl acetate and vinyl propionate; aromatic vinyl compounds such as styrene, substituted styrenes (α-methylstyrene, etc.) and vinyltoluene; non-aromatic ring-containing (meth)acrylates such as cyclohexyl (meth)acrylate, t-butylcyclohexyl (meth)acrylate, cyclopentyl di(meth)acrylate and isobornyl (meth)acrylate; aromatic ring-containing (meth)acrylates such as aryl (meth)acrylates (e.g. phenyl (meth)acrylate, benzyl (meth)acrylate), aryloxyalkyl (meth)acrylate (e.g. phenoxyethyl (meth)acrylate), arylalkyl (meth)acrylate (e.g. benzyl (meth)acrylate); olefinic monomers such as ethylene, propylene, isoprene, butadiene and isobutylene; chlorine-containing monomers such as vinyl chloride and vinylidene chloride; isocyanate group-containing monomers such as 2-(meth)acryloxyethylisocyanate; alkoxy group-containing monomers such as methoxymethyl (meth)acrylate and ethoxyethyl (meth)acrylate; vinyl ether-based monomers such as methyl vinyl ether, ethyl vinyl ether and isobutyl vinyl ether.
Yet other examples of the compound that can be used as the monomer C include polyfunctional monomers. Specific examples of polyfunctional monomers include compounds having two or more (meth)acryloyl groups per molecule such as 1,6-hexanediol di(meth)acrylate, ethylene glycol di(meth)acrylate, pentaeryrthritol di(meth)acrylate, trimethylolpropane tri(meth)acrylate, dipentaerythritol hexa(meth)acrylate and methylene bisacrylamide. When using such a polyfunctional monomer, its amount used is not particularly limited. It is usually suitably 2 % by weight or less (more preferably 1 % by weight or less) of all the monomers.

The monomer A content in the total monomer content can be, but not particularly limited to, for instance, 50 % by weight or greater, suitably 60 % by weight or greater, preferably 70 % by weight or greater, more preferably 80 % by weight or greater, or yet more preferably 85 % by weight or greater. The art disclosed herein can be preferably implemented, for instance, in an embodiment where the monomer A content in the total monomer content is 90 % by weight or greater (or even 95 % by weight or greater). The monomer A content in the total monomer content can be, for instance, 99.9 % by weight or less. From the standpoint of the reducing the peel strength to itself and of the anti-residue properties, etc., it is usually preferably 99.5 % by weight or less, or more preferably 99 % by weight or less.

When using a monomer B, the monomer B content in the total monomer content can be, for instance, 0.1 % by weight or greater. From the standpoint of reducing the peel strength to itself and of the anti-residue properties, etc., the monomer B content in the total monomer content is usually preferably 0.5 % by weight or greater, or more preferably 1 % by weight or greater. From the standpoint of keeping the peel strength ratio ($S_B/S_A$) to a suitable range, the monomer B content in the monomer content is usually suitably 5 % by weight or less, or preferably 4 % by weight or less (e.g. 3 % by weight or less).

The amount of the monomer C used is suitably selected so as not to exceed 35 % by weight of the total monomer content, preferably not to exceed 30 % by weight, or more preferably not to exceed 20 % by weight. The art disclosed herein can be preferably implemented in an embodiment where the monomer C is used in an amount of 0 % by weight or greater, but less than 15 % by weight of the total monomer content, for instance, 0 % by weight or greater, but less than 10 % by weight. The amount of the monomer C used being 0 % by weight of the total monomer content means at least that no monomer C is used intentionally.

Although not particularly limited to this, when using a monomer C, the monomer C content in the total monomer content can be, for instance, 0.1 % by weight or greater to favorably obtain the effects of the use of the monomer C. From the standpoint of obtaining greater effects, the monomer C content in the total monomer content is usually preferably 0.5 % by weight or greater, more preferably 1 % by weight or greater, or yet more preferably 3 % by weight or greater. In a preferable embodiment, the monomer C content in the total monomer content can be, for instance, 1 to 20 % by weight (more preferably 3 to 15 % by weight).

In a preferable embodiment of the art disclosed herein, the acrylic monomer content in the total monomer content constituting the acrylic polymer can be greater than 95 % by weight, but 100 % by weight or less. In other words, in a preferable acrylic polymer, the copolymerization ratio of the acrylic monomer is greater than 95 % by weight. A PSA comprising such an acrylic polymer as the base polymer and a surface protection sheet comprising the PSA may favorably achieve both the preferable peel strength ratio ($S_B/S_A$) and peel strength to itself disclosed herein.

While there are no particular limitations, the acrylic polymer preferably has, as its functional group, at least either a carboxy group or a hydroxy group. Combined with a suitable type of crosslinking agent in a suitable amount, the acrylic polymer having such a functional group may provide a surface protection sheet that satisfies the preferable peel strength to itself and peel strength ratio ($S_B/S_A$) disclosed herein. The functional group-containing acrylic polymer can be typically obtained by emulsion polymerization of a starting monomer mixture comprising at least either a carboxy group-containing monomer (monomer B) or a hydroxy group-containing monomer (monomer C).

The acrylic polymer preferably has, but not particularly limited to, a composition that yields a glass transition temperature (Tg) of the polymer of 0 °C or lower. The Tg of the acrylic polymer is usually suitably 10 °C or lower, or preferably - 20 °C or lower. From the standpoint of obtaining sufficient initial adhesion (initial low-temperature adhesion) even in a low-temperature environment such as the outdoors during winter, the Tg of the acrylic polymer is preferably -25 °C or lower, or more preferably -30 °C or lower. From the standpoint of preventing the aged peel strength from increasing excessively and keeping the peel strength ratio ($S_B/S_A$) to a suitable range, the Tg of the acrylic polymer is usually suitably -55 °C or higher, or more preferably -50 °C or higher (e.g. -45 °C or higher, or even -40 °C or higher).

Here, the Tg of the acrylic polymer refers to the value determined by the Fox equation based on the Tg values of homopolymers of the respective monomers in the starting monomer mixture constituting the polymer and their weight fractions (copolymerization ratio by weight) in the total monomer content. Thus, the Tg of the acrylic polymer can be adjusted by suitably changing the types of monomers and their compositional ratio.

As the Tg values of the homopolymers, values given in known documents are used.

In particular, with respect to the monomers shown in Table 1, the values in the table are used as the Tg values of the respective homopolymers.

[Table 1]

| Table 1 | | | |
| --- | --- | --- | --- |
| 2-Ethylhexyl acrylate | -70 °C | n-Butyl methacrylate | 20 °C |

(continued)

| Table 1 | | | |
|---|---|---|---|
| n-Hexyl acrylate | -65 °C | Methyl methacrylate | 105 °C |
| n-Octyl acrylate | -65 °C | Acrylic acid | 106 °C |
| Isononyl acrylate | -60 °C | Methacrylic acid | 228 °C |
| n-Nonyl acrylate | -58 °C | vinyl acetate | 32 °C |
| n-Butyl acrylate | -55 °C | Styrene | 100 °C |
| Ethyl acrylate | -20 °C | Isobornyl acrylate | 94 °C |
| Lauryl acrylate | 0 °C | Isobornyl methacrylate | 180 °C |
| 2-Ethylhexyl methacrylate | -10° C | N-Isopropylacrylamide | 135 °C |
| Methyl acrylate | 8 °C | N-Acryloylmorpholine | 145 °C |

With respect to the Tg values of homapolymers other than the examples listed above, the values given in "Polymer Handbook" (3rd edition, John Wiley & Sons, Inc., Year 1989) are used.

When no values are given in the "Polymer Handbook" (3rd edition, John Wiley & Sons, Inc., Year 1989), values obtained by the following measurement method are used.

In particular, to a reaction vessel equipped with a thermometer, a stirrer, a nitrogen inlet and a condenser, are added 100 parts by weight of monomer, 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature, and a homopolymer solution having 33 % by mass solids content is obtained. Then, this homopolymer solution is applied onto a release liner by flow coating and allowed to dry to prepare a test sample (a sheet of homopolymer) of about 2 mm thickness. This test sample is cut out into a disc of 7.9 mm diameter and is placed between parallel plates; and while applying a shear strain at a frequency of 1 Hz using a rheometer (model name ARES available from TA Instruments, Japan), the viscoelasticity is measured in the shear mode over a temperature range of -70 °C to 150 °C at a heating rate of 5 °C/min; and the temperature value at the maximum of the loss modulus G" curve is taken as the Tg of the homopolymer.

[Monomer A1]

Although not particularly limited to this, as the acrylic polymer in the art disclosed herein, a polymer in which 40 % by weight or more alkyl acrylate with 6 to 9 alkyl carbons (or "monomer A1" hereinafter) has been copolymerized can be preferably used. Of the monomer A, the monomer A 1 is a compound having a hydrogen atom for $R^1$ and a alkyl group for $R^2$ in the general formula (1). The acrylic polymer having such a copolymer composition can be typically obtained by emulsion polymerization of a starting monomer mixture comprising a monomer A1 at such a ratio. For the monomer A1, solely one species or a combination of two or more species can be used.

Specific examples of the monomer A1 include n-hexyl acrylate (Tg -65 °C), 2-ethylhexyl acrylate (Tg -70 °C), n-octyl acrylate (Tg -65 °C), n-nonyl acrylate(Tg -58 °C) and isononyl acrylate (Tg -60 °C). In particular, 2-ethylhexyl acrylate is preferable. For instance, the 2-ethylhexyl acrylate ratio in the monomer A1 can be greater than 50 % by weight, but 100 % by weight or less (preferably 70 to 100 % by weight).

The alkyl acrylate belonging to the monomer A1 is characterized by having a low homopolymer Tg (typically with Tg below -55 °C) as described above. With the base polymer being an acrylic polymer in which a relatively large amount of a monomer A1 having such a low homopolymer Tg has been copolymerized, a surface protection sheet can be obtained with greater low-temperature properties (e.g. low-temperature initial adhesion).

The alkyl acrylate belonging to the monomer A 1 has a relatively long alkyl group with 6 to 9 carbon atoms. By copolymerizing such a monomer A1 at least 40 % by weight, the surface protection sheet can be obtained with less marking on the adherend. The adherend may have a paint film (paint coat) on the surface. The paint film may be a urethane-based paint film formed, for instance, upon reaction of an acrylic polyol resin and a polyisocyanate resin. While how such an effect is obtained is not necessarily clear, it is thought, for instance, that the monomer A1 has a relatively low SP value among the alkyl acrylates (e.g. having an SP value lower than that of an alkyl acrylate with a fewer alkyl carbons) and this contributes in a favorable manner.

In this description, the SP value refers to the solubility parameter value determined from the basic structure of the compound by the method proposed by Fedors.

The amount of the monomer A1 used is not particularly limited. It can be, for instance, 40 % by weight or more of the total monomer content while in the aforementioned range of the amount of the monomerA used. In a preferable embodiment, the monomer A1 can be used in an amount of 45 % by weight or more of the total monomer content, 50 % by weight or more, or even greater than 50 % by weight. On the other hand, from the standpoint of easily adjusting the Tg of the acrylic polymer to the preferable ranges described above, etc., the amount of the monomer A1 used is suitably in a range of 80 % by weight or less of the total monomer content, usually preferably 75 % by weight or less, or more preferably in a range of 70 % by weight or less (e.g. 65 % by weight or less).

[Monomer A2]

Although not particularly limited to this, as the acrylic polymer in the art disclosed herein, a polymer in which an alkyl (meth)acrylate having 4 to 20 alkyl carbons and having a homopolymer Tg of -50°C or higher (or "monomer A2" hereinafter) has been copolymerized can be preferably used. Of the monomerA, the monomer A2 is a compound having a hydrogen atom or methyl group for $R^1$ and a $C_{4-20}$ alkyl group for $R^2$ in the general formula (1) with a homopolymer Tg of -50 °C or higher. The acrylic polymer having such a copolymer composition can be typically obtained by emulsion polymerization of a starting monomer mixture comprising a monomer A2. For the monomer A2, solely one species or a combination of two or more species can be used.

The alkyl (meth)acrylate belonging to the monomer A2 has a homopolymer Tg higher than -50 °C. Thus, by copolymerizing an alkyl (meth)acrylate having a lower Tg and the monomer A2, the Tg of the acrylic polymer can be adjusted to the preferable range. This can prevent the aged peel strength ($S_B$) from increasing excessively so as to favorably bring about the effect to keep the peel strength ratio ($S_B/S_A$) in the suitable range.

As for the monomer A2, the homopolymer Tg is preferably in a range of -40 °C to 60°C, or more preferably in a range of -30 °C to 40 °C (e.g. -20 °C to 30 °C). Specific examples of a monomer A2 that can be preferably used include n-butyl methacrylate (Tg 20 °C), 2-ethylhexyl methacrylate (Tg -10 °C) and lauryl acrylate (Tg 0°C).

When using a monomer A2, its amount used is not particularly limited. For instance, it can be selected within the aforementioned preferable ranges of the amount of the monomer A used. The amount of the monomer A2 used can be, for instance, 5 % by weight or more of the total monomer content, or can be also 10 % by weight or more. In a preferable embodiment, the monomers A1 and A2 can be used together so that their combined amount is in the preferable ranges of the amount of the monomer A used.

From the standpoint of obtaining the effect of the use of the monomer A2 to a greater extent, the amount of the monomer A2 used can be 20 % by weight or more of the total monomer content, also 30 % by weight or more, or even 35 % by weight or more. The monomer A2 is suitably used in a range of 60 % by weight or less (e.g. 50 % by weight or less) of the total monomer content.

From the standpoint of effciently adjusting the Tg of the acrylic polymer, the starting monomer mixture may comprise as the monomer A an alkyl (meth)acrylate having a homopolymer Tg higher than 0 °C. Examples include methyl acrylate, methyl methacrylate, ethyl methacrylate, t-butyl methacrylate, isobutyl methacrylate, n-butyl methacrylate and hexyl methacrylate. Species that can be used may or may not belong to the monomer A2. These alkyl (meth)acrylates can be used solely as one species or in a combination of two or more species. The amount of the alkyl (meth)acrylate with Tg above 0 °C used can be, but not particularly limited to, for instance, 5 to 55 % by weight of the total monomer content, or it is usually suitably 10 to 50 % by weight, or preferably 10 to 30 % by weight (e.g. 15 to 25 % by weight).

[Monomer C1]

Although not particularly limited to this, as the acrylic polymer in the art disclosed herein, a polymer in which a monomer C having a homopolymer Tg of 60 °C or higher (or "monomer C1" hereinafter) has been copolymerized can be preferably used. Specific examples of a compound that can be used as the monomer C1 include cyclohexyl methacrylate, isobomyl acrylate, isobornyl methacrylate, N-isopropylacrylamide and N-acryloylmorpholine. A preferable monomer C has a homopolymer Tg of 80 °C or higher (typically 80 °C to 200 °C).

With the use of an acrylic polymer in which the monomer C1 is copolymerized, the anti-lifting properties of the surface protection sheet tends to improve. Copolymerizing the monomer C1 may be an effective means to decrease the tack energy. It may be an effective means to lower the E/T value.

In this description, the "anti-lifting properties" refers to the capability of the surface protection sheet applied to an adhered to resist lifting from the adherend surface caused by outdoor exposure and environmental changes as in general weathering tests or by temperature changes (thermal history) and aging, etc. The level of lifting of the surface protection sheet can be determined by the anti-lifting test described later in Examples.

The amount of the monomer C1 used is not particularly limited. For instance, it can be selected in the aforementioned preferable range of the amount of the monomer C used. The amount of the monomer C1 used can be, for instance, 0.1 to 20 % by weight of the total monomer content, or it is usually preferably 1 to 20 % by weight or more preferably 3 to 15 % by weight (e.g. 5 to 12 % by weight).

[Emulsion Polymerization]

The acrylic polymer in the art disclosed herein may be obtained by emulsion polymerization of a starting monomer mixture comprising monomers as those described earlier. The embodiment of emulsion polymerization is not particularly limited. Various monomer supply methods, polymerization conditions, materials and the like similar to those for heretofore known general emulsion polymerization can be suitably used to carry out polymerization. As the monomer supply method, for instance, any method can be used among an all-at-once supply method where all starting monomers are supplied at once, continuous supply method, portionwise supply method, and so on. The monomers can be partially or entirely mixed and emulsified in water with a surfactant and the resulting emulsion can be supplied to the polymerization vessel.

The polymerization temperature can be about 20 °C to 100 °C, or it is usually suitably about 40 °C to 80 °C.

Examples of the polymerization initiator include, but not limited to, azo-based initiators, peroxide-based initiators and redox-based initiators by the combination of a peroxide and a reducing agent. For the polymerization initiator, solely one species or a combination of two or more species can be used.

Examples of azo-based initiators include 2,2'-azobisisobutyronitrile, 2,2'-azobis[N-(2-carboxyethyl)-2-methylpropionamidine] hydrate, 2,2'-azobis(2-methylpropionamidine) disulfate salt, 2,2'-azobis(2-methylpropionamidine) dihydrochloride, 2,2'-azobis(2-methylpropionamidine) dihydrochloride, 2,2'-azobis[2-(5-methyl-2-imidazolin-2-yl)propane] dihydrochloride and 2,2'-azobis(N,N'-dimethylene isobutylamidine) dihydrochloride.

Examples of peroxide-based initiators include persulfates such as potassium persulfate and ammonium persulfate; benzoyl peroxide, t-butyl hydroperoxide, di-t-butyl peroxide, dicumyl peroxide, dilauroyl peroxide, di-n-octanoyl peroxide, di(4-methylbenzoyl) peroxide, t-butyl peroxybenzoate, t-butyl peroxyisobutyrate, t-hexyl peroxypivalate, t-butyl peroxypivalate, di(2-ethylhexyl) peroxydicarbonate, di(4-t-butylcyclohexyl) peroxydicarbonate, di-sec-butyl peroxydicarbonate, t-butyl peroxyneodecanoate, 1,1,3,3-tetramethyl butylperoxy-2-ethylhexanoate, 1,1-bis(t-butylperoxy)-3,3,5-trimethylcyclohexane, 1,1-bis(t-butylperoxy)cyclododecane, 1,1-bis(t-hexylperoxy)cyclohexane and hydrogen peroxide.

Examples of redox-based initiators include a combination of a peroxide and ascorbic acid (combination of hydrogen peroxide water and ascorbic acid, etc.), a combination of a peroxide and an iron(II) salt (combination of hydrogen peroxide water and an iron(II) salt, etc.), and a combination of a persulfate salt and sodium hydrogen sulfite.

The amount of the polymerization initiator used can be suitably selected in accordance with the type of initiator, monomer species (monomer composition), polymerization conditions, etc. The amount of the polymerization initiator used is usually suitably in a range of, for instance, about 0.001 to 0.5 part by weight to 100 parts by weight of the monomers, preferably in a range of 0.002 to 0.1 part by weight, or more preferably in a range of 0.005 to 0.05 part by weight.

The water-dispersed PSA composition in the art disclosed herein can be favorably prepared by using, but not particularly limited to, a water dispersion comprising particles of an acrylic polymer as described earlier (acrylic polymer particles) in an aqueous solvent. The acrylic polymer particles have an average particle diameter of preferably 0.01 $\mu$m to 1 $\mu$m or more preferably 0.05 $\mu$m to 0.8 $\mu$m, typically 0.1 $\mu$m to 0.5 $\mu$m (e.g. 0.1 $\mu$m to 0.3 $\mu$m). When the average particle diameter of acrylic polymer particles is excessively smaller than 0.41 $\mu$m, the viscosity of the water dispersion of the acrylic polymer particles may increase, making it difficult to obtain a smooth PSA layer when applying the composition. When the average particle diameter of acrylic polymer particles is far larger than 1 $\mu$m, the interparticle adhesion may decrease with a tendency to poorer anti-residue properties.

[Surfactant]

Emulsion polymerization of the starting monomers is usually carried out in the presence of a surfactant (emulsifier). The amount of the surfactant used is not particularly limited. In view of the polymerization stability, dispersion stability of the polymerization reaction mixture, anti-contaminating properties of the surface protection sheet, etc., the amount of the surfactant used in the emulsion polymerization is usually suitably about 0.1 to 10 parts by weight to 100 parts by weight of the total monomer content, or preferably about 0.5 to 5 parts by weight.

As the surfactant, a known anionic surfactant, nonionic surfactant and the like can be used. A surfactant having a radically polymerizable functional group can also be used. Hereinafter, the surfactant having a radically polymerizable functional group is referred to as a reactive (polymerizing) surfactant. On the contrary to this, a general surfactant free of a radically polymerizable functional group may be referred to as a non-reactive (non-polymerizing) surfactant. For the surfactant, solely one species or a combination of two or more species can be used.

Examples of a non-reactive anionic surfactant include alkyl sulfates such as lauryl sulfate and octadecyl sulfate; fatty acid salts; alkyl benzene sulfonates such as nonyl benzene sulfonate and dodecyl benzene sulfonate; naphthalene sulfonates such as dodecyl naphthalene sulfonate; alkyl diphenyl ether disulfonates such as dodecyl diphenyl ether disulfonate; polyoxyethylene alkyl ether sulfates such as polyoxyethylene octadecyl ether sulfate and polyoxyethylene lauryl ether sulfate; polyoxyethylene alkyl phenyl ether sulfates such as polyoxyethylene lauryl phenyl ether sulfate; polyoxyethylene styrenated phenyl ether sulfate; sulfosuccinates such as lauryl sulfosuccinate and polyoxyethylene lauryl sulfosuccinate; polyoxyethylene alkyl ether phosphates; and polyoxyethylene alkyl ether acetates. When the anionic surfactant is forming a salt, the salt can be, for instance, a metal salt such as the sodium salt, potassium salt, calcium salt and magnesium salt; ammonium salt; amine salt, or the like. Among the metal salts, monovalent metal salts are preferable.

Examples of a non-reactive nonionic surfactant include polyoxyethylene alkyl ethers such as polyoxyethylene lauryl ether and polyoxyethylene stearyl ether; polyoxyethylene alkyl phenyl ethers such as polyoxyethylene octyl phenyl ether and polyoxyethylene nonyl phenyl ether; sorbitan fatty acid esters such as sorbitan monolaurate, sorbitan monostearate and polyoxyethylene sorbitan monolaurate; polyoxyethylene glyceryl ether fatty acid esters; and polyoxyethylenepolyoxypropylene block copolymers.

The reactive surfactant is not particularly limited as far as it has a radically polymerizable functional group. For instance, the reactive surfactant may have a structure such that a radically polymerizable functional group is incorporated in an aforementioned anionic surfactant or nonionic surfactant. The type of radically polymerizable functional group is not particularly limited. For instance, it can be an alkenyl group, acryloyl group, methacryloyl group, etc. Specific examples of the alkenyl group include propenyl groups and isopropenyl group ($CH_2=C(CH_3)-$). The concept of propenyl group referred to herein encompasses 1-propenyl group ($CH_3-CH=CH-$) and 2-propenyl group ($CH_2=CH-CH_2-$which may be called allyl group).

Examples of an anionic reactive surfactant include polyoxyethylene (allyloxymethyl) alkyl ether sulfates (e.g. ammonium salts), polyoxyethylene nonyl propenyl phenyl ether sulfates (e.g. ammonium salts), alkyl allyl sulfosuccinates (e.g. sodium salts), methacryloxy polyoxypropylene sulfuric acid ester salts (e.g. sodium salts), and polyoxyalkylene alkenyl ether sulfates (e.g. an ammonium salt having an isopropenyl group as the terminal alkenyl group). When the anionic reactive surfactant is forming a salt, the salt can be, for instance, a metal salt such as sodium salt or a non-metal salt such as ammonium salt and amine salt.

Examples of a nonionic reactive surfactant include polyoxyethylene nonyl propenyl phenyl ether.

Commercially available surfactants include products of Dai-ichi Kogyo Seiyaku Co., Ltd., under trade names AQUALON HS-10, AQUALON HS-1025, AQUALON HS-20, AQUALON KH-10, AQUALON KH-1025, AQUALON KH-05, AQUALON BC-0515, AQUALON BC-10, AQUALON BC-1025, AQUALON BC-20, AQUALON BC-2020, AQUALON RN-20, AQUALON RN-30 and AQUALON RN-50; products ofADEKA corporation, under trade names ADEKARIA SOAP SE-10N and ADEKARIA SOAP SR-1025; products of Kao Corporation, under trade names LATEMULE PD-104, LATEMULE PD-420, LATEMULE PD-430 and LATEMULE PD-450; products of Sanyo Chemical Industries, Ltd., under trade names ELEMINOL JS-20 and ELEMINOL RS-3000; and a product of Nippon Nyukazai Co., Ltd., under trade name ANTOX MS-60.

Although not particularly limited to this, a reactive surfactant having an oxyethylene chain can be preferably used. The oxyethylene chain refers to a structure of repeating oxyethylene units, that is, a structural moiety represented by $-(C_2H_4O)_n-$, with n indicating the number of repeats of the oxyethylene unit. For instance, in a preferable reactive surfactant, the number of repeats, n, is about 5 to 30 (e.g. 8 to 25).

From the standpoint of the polymerization stability in the emulsion polymerization of the starting monomer mixture disclosed herein, it is preferable to use a reactive surfactant having a propenyl group. A preferable reactive surfactant has a propenyl group and also an oxyethylene chain.

From the standpoint of the emulsifying ability, etc., an anionic reactive surfactant can be preferably used. When the anionic reactive surfactant is in a salt form, as the salt, a non-metal salt is preferable from the standpoint of preventing marking on the adherend surface (e.g. a paint film surface). In particular, an ammonium salt is preferable. While detailed reasons are not clear, the use of an ammonium salt tends to bring about greater anti-marking properties as compared to embodiments using other salts.

When using a nonionic reactive surfactant, more favorable results can be obtained by the combined use with other surfactant(s), such as an anionic reactive surfactant, anionic non-reactive surfactant and nonionic non-reactive surfactant.

By carrying out emulsion polymerization of the starting monomer mixture in the presence of a reactive surfactant having a radically polymerizable functional group, the reactive surfactant may undergo a reaction to be incorporated into the acrylic polymer. The reactive surfactant incorporated in the acrylic polymer is unlikely to bleed out to the PSA layer surface because its move within the PSA layer is limited. Accordingly, the use of the reactive surfactant can reduce bleed-out of a low molecular weight compound to the PSA layer surface. This is preferable from the standpoint of the low-contaminating properties of the surface protection sheet. From the standpoint of obtaining greater low-contaminating properties, it is preferable to apply an embodiment using solely a reactive surfactant as the surfactant for emulsion polymerization.

In the emulsion polymerization, as necessary, various heretofore known chain transfer agents (which can be considered also as a molecular weight-adjusting agent or polymerization degree-adjusting agent) can be used. For the chain transfer agent, solely one species or a combination of two or more species can be used. As the chain transfer agent, mercaptans can be preferably used, such as n-dodecyl mercaptan, t-dodecyl mercaptan, glycidyl mercaptan, 2-mercaptoethanol, mercaptoacetic acid, thioglycolic acid, 2-ethylhexyl thioglycolate and 2,3-dimercapto-1-propanol. Examples of particularly preferable chain transfer agents include n-dodecylmercaptan and t-dodecyl mercaptan. When using a chain transfer agent, its amount used to 100 parts by weight of the total monomer content is, for instance, possibly about 0.01 to 1 part by weight, preferably 0.02 to 0.1 part by weight, or more preferably 0.03 to 0.07 part by weight. The art disclosed herein can be preferably practiced in an embodiment that uses no chain transfer agent.

The water-dispersed PSA composition is preferably an emulsion-based PSA composition comprising an acrylic polymer and a crosslinking agent. Such a PSA composition can be prepared, for instance, by adding the crosslinking agent to a polymer emulsion in which particles of the acrylic polymer are dispersed in an aqueous solvent. As the polymer emulsion, it is possible to use a polymerization reaction mixture obtained by emulsion polymerization or the polymerization reaction mixture after subjected to a treatment as necessary such as pH adjustment (e.g. neutralization), adjustment of the non-volatile concentration, or the like. Usually, the dispersion stability of the emulsion can be increased by adjusting the pH to a suitable range (e.g. a pH range of about 6 to 9) by adding a neutralizing agent such as ammonia water to the polymerization reaction mixture. It is preferable to employ a method where the crosslinking agent is added after such pH adjustment.

[Crosslinking Agent]

The type of crosslinking agent is not particularly limited. A suitable species can be selected and used among various crosslinking agents usually used in the PSA field. Specific examples include isocyanate-based crosslinking agents, silane-based crosslinking agents, epoxy-based crosslinking agents, oxazoline-based crosslinking agents, aziridine-based crosslinking agents, and metal chelate-based crosslinking agents. These can be used solely as one species or in a combination of two or more species.

The amount of the crosslinking agent used can be suitably selected in view of the copolymer composition of the acrylic polymer, the structure of the crosslinking agent, the purpose of the use of crosslinking agent, the adhesive properties (e.g. the target initial peel strength ($S_A$) value and peel strength to itself) of the crosslinked PSA layer and so on. The amount of the crosslinking agent used is, but not particularly limited to, for instance, possibly about 0.01 to 15 parts by weight to 100 parts by weight of the acrylic polymer. From the standpoint of easily adjusting the adhesive properties of the crosslinked PSA layer to suitable ranges, the amount of the crosslinking agent used is usually preferably 0.5 to 10 parts by weight relative to 100 parts by weight of the acrylic polymer.

Favorable examples of the crosslinking agent include oxazoline-based crosslinking agents, isocyanate-based crosslinking agents and epoxy-based crosslinking agents. The surface protection sheet obtained with such a crosslinking agent is preferable because excessive increase in aged peel strength ($S_B$) is prevented, likely keeping the peel strength ratio ($S_B/S_A$) to a suitable range. The surface protection sheet obtained by using the crosslinking agent may show little increase in peel strength and may be less likely to cause leftover adhesive residue and contamination on the adherend surface, for instance, even in such an application where the adherend to which the surface protection sheet is adhered is stored outside for a long period.

As the oxazoline-based crosslinking agent, a species having one or more oxazoline groups per molecule can be used without particular limitations. For the oxazoline-based crosslinking agent, solely one species or a combination of two or more species can be used. In the water-dispersed PSA composition, it is preferable to use a water-soluble or water-dispersible oxazoline-based crosslinking agent.

The oxazoline group can be either 2-oxazoline group, 3-oxazoline group or 4-oxazoline group. Usually, a 2-oxazoline group-containing oxazoline-based crosslinking agent can be preferably used. As the oxazoline-based crosslinking agent, a water-soluble copolymer or a water-dispersed copolymer can be used, which is obtained by copolymerizing an addition-polymerizable oxazoline such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline with other monomer(s).

Examples of a commercially available oxazoline-based crosslinking agent include products of Nippon Shokubai Co., Ltd., under trade names EPOCROS WS-500, EPOCROS WS-700, EPOCROS K-2010E, EPOCROS K-2020E and EPOCROS K-2030E.

From the standpoint of adding suitable cohesiveness to the PSA layer to obtain good anti-residue properties, to 1 equivalent of carboxy group in the acrylic polymer, the oxazoline-based crosslinking agent can be used in an amount that provides 0.1 equivalent of oxazoline group or more, preferably 0.15 equivalent or more, more preferably 0.2 equivalent or more, for instance, 0.3 equivalent or more. From the standpoint of obtaining good low-contaminating properties, the oxazoline-based crosslinking agent is used in an amount that provides preferably 5 equivalents of oxazoline group or less to 1 equivalent of carboxy group in the acrylic polymer, more preferably 3 equivalents or less, or yet more preferably 1 equivalent or less, for instance, 0.7 equivalent or less (typically 0.5 equivalent or less).

As the isocyanate-based crosslinking agent, a polyisocyanate-based crosslinking agent having two or more isocyanate groups can be used without particular limitations. The isocyanate groups in the isocyanate-based crosslinking agent may have protecting groups, forming isocyanate-forming functional groups (blocked isocyanates) whose isocyanate groups are temporarily protected, for instance, via treatment with a blocking agent, etc. For the isocyanate-based crosslinking agent, solely one species or a combination of two or more species can be used.

Examples of the isocyanate-based crosslinking agent include aromatic polyisocyanates such as tolylene diisocyanate and xylene diisocyanate; alicyclic isocyanates such as isophorone diisocyanate; and aliphatic polyisocyanates such as hexamethylene diisocyanate.

More specific examples include lower aliphatic polyisocyanates such as butylene diisocyanate and hexamethylene diisocyanate; alicyclic polyisocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate, xylylene diisocyanate and polymethylene polyphenyl diisocyanate; isocyanate adducts such as trimethylolpropane/tolylene diisocyanate trimer adduct (e.g. trade name CORONATE L available from Nippon Polyurethane Industry Co., Ltd.), trimethylolpropane/hexamethylene diisocyanate trimer adduct (e.g. trade name CORONATE HL available from Nippon Polyurethane Industry Co., Ltd.) and hexamethylene diisocyanate isocyanurate (e.g. trade name CORONATE HX available from Nippon Polyurethane Industry, Co., Ltd.); polyisocyanates such as polyether polyisocyanate and polyester polyisocyanate; adducts of these polyisocyanates and polyols; and polyfunctionalization products of these polyisocyanates with isocyanurate bonds, biuret bonds, allophanate bonds, etc.

In the water-dispersed PSA composition, it is preferable to use an isocyanate-based crosslinking agent soluble or dispersible in water. For instance, a water-soluble, water-dispersible or self-emulsifying isocyanate-based crosslinking agent can be preferably used. Examples of commercial products of such isocyanate-based crosslinking agent (aqueous isocyanate-based crosslinking agent) include products of DIC Corporation under trade names BURNOCK DNW-5000, BURNOCK DNW-5010, BURNOCK DNW-5100, BURNOCK DNW-5200, BURNOCK DNW-5500 and BURNOCK DNW-6000; products of Nippon Polyurethane Industry Co., Ltd., under trade names AQUANATE 100, AQUANATE 105, AQUANATE 110, AQUANATE 120, AQUANATE 130, AQUANATE 200, AQUANATE 210; products of Mitsui Chemicals & SKC Polyurethanes Inc., under trade names TAKENATE WD-220, TAKENATE WD-240, TAKENATE WD-720, TAKENATE WD-725, TAKENATE WD-726, TAKENATE WD-730, TAKENATE WB-700, TAKENATE WB-720 and TAKENATE WB-920; products of Dai-ichi Kogyo Seiyaku Co., Ltd., under trade names ELASTRON BN-04, ELASTRON BN-11, ELASTRON BN-27, ELASTRON BN-69 and ELASTRON BN-77.

As the epoxy-based crosslinking agent, a species having two or more epoxy groups per molecule can be used without particular limitations. An epoxy-based crosslinking agent having 3 to 5 epoxy groups per molecule is preferable. For the epoxy-based crosslinking agent, solely one species or a combination of two or more species can be used. In the water-dispersed PSA composition, it is preferable to use a water-soluble or water-dispersible epoxy-based crosslinking agent.

Specific examples of the epoxy-based crosslinking agent include N,N,N',N'-tetraglycidyl-m-xylenediamine, 1,3-bis(N,N-diglycidylaminomethyl)cyclohexane, 1,6-hexanediol diglycidyl ether, polyethylene glycol diglycidyl ether, and polyglycerol polyglycidyl ether.

Commercially available epoxy-based crosslinking agents include products of Mitsubishi Gas Chemical Co., Inc., under trade names TETRAD-X and TETRAD-C, a product of DIC Corporation under trade name EPICLOM CR-5L, a product of Nagase ChemteX Corporation under trade name DENACOL EX-512, and a product of Nissan Chemical Industries, Ltd., under trade name TEPIC-G.

The surface protection sheet disclosed herein preferably has a PSA layer obtained from a water-dispersed PSA composition that comprises at least an oxazoline-based crosslinking agent as the crosslinking agent. The water-dispersed PSA composition comprising the oxazoline-based crosslinking agent may be readily applied even to a low-polar surface. Such a PSA composition is less likely to cause repelling or peeling when applied and thus can form a PSA layer of more uniform quality. With water-dispersed PSA compositions comprising oxazoline-based crosslinking agents, there is a tendency that the adhesive performance of the surface protection sheet tends to be little affected by the length of the period from the preparation of the water-dispersed PSA composition comprising the crosslinking agent to the formation of the PSA layer. These are preferable from the standpoint of the productivity and stability of quality of the surface protection sheet. These effects can be obtained particularly well in the water-dispersed PSA composition that consists of one, two or more species of oxazoline-based crosslinking agent as the crosslinking agent.

The PSA composition may comprise a known tackifier such as a rosin-based tackifier, terpene-based tackifier and hydrocarbon-based tackifier. From the standpoint of avoiding excessive increase in peel strength to itself, the amount of tackifier used is preferably 5 parts by weight or less to 100 parts by weight of the acrylic polymer or more preferably I part by weight or less. The art disclosed herein may be preferably practiced in an embodiment using no tackifier.

[Aqueous Solvent]

The water-dispersed PSA composition disclosed herein is defined as a PSA composition comprising an aqueous solvent as the solvent. The aqueous solvent in the water-dispersed PSA composition disclosed herein refers to water or a solvent mixture comprising water as the primary component (a component accounting for more than 50 % by weight). The other solvent(s) forming the solvent mixture besides water can be one, two or more species selected from various water-miscible organic solvents (lower alcohols, etc.). In the aqueous solvent in this description, the water content is typically 90 % by weight or higher, or preferably 95 % to 100 % by weight.

As far as the effects of the present invention are not significantly impaired, the PSA composition may further contain known additives that can be used in PSA compositions, such as viscosity-adjusting agent (thickener, etc.), release-adjusting agent, plasticizer, softened, leveling agent, dispersing agent, anti-foaming agent, surface lubricant, antistatic agent, preservative, antifungal agent, and weatherability enhancer (e.g. UV absorber, anti-aging agent, antioxidant, photostabilizer). These additives can be used solely as one species or in a combination of two or more species. The amount of each additive can be about the same as the amount usually added in the field of PSA compositions for surface protection sheets.

The non-volatile content (NV) of the PSA composition is, but not particularly limited to, suitably about 25 to 75 % by weight or usually preferably about 30 to 70 % by weight.

From the standpoint of the low-contaminating properties, etc., the PSA layer in the art disclosed herein can be formed with the PSA layer being essentially free of a weatherability enhancer. For instance, the weatherability enhancer content per 100 parts by weight of the rubber-like polymer in the PSA layer is preferably less than 0.3 part by weight or more preferably less than 0.1 part by weight. The PSA layer is preferably essentially free of a weatherability enhancer. Here, the PSA layer being essentially free of a weatherability enhancer means at least that no weatherability enhancer is used intentionally.

The total amount of additives is, to 100 parts by weight of the rubber-like polymer in the PSA layer, for instance, possibly 5 parts by weight or less, preferably 3 parts by weight or less, or more preferably 1 part by weight or less. From the standpoint of obtaining greater low-contaminating properties, the total amount of additives can be less than 0.5 part by weight or even less than 0.3 part by weight.

[PSA Layer]

The PSA layer can be formed based on a method for forming PSA layers known in the PSA sheet field. For instance, a direct method can be preferably employed, where a PSA layer is formed by directly providing (typically applying) the PSA composition to the support substrate followed by drying. Alternatively, a transfer method can be employed where a PSA layer is pre-formed on a releasable surface (e.g. release face) by applying the PSA composition thereto and allowing the composition to dry. As the release face, a release liner surface or the back face of the support substrate treated with a release agent can be used. The PSA layer of the surface protection sheet disclosed herein is typically formed as a continuous layer.

The PSA composition can be applied, for instance, using a known or commonly used coater such as a gravure roll coater, reverse roll coater, kiss roll coater, dip roll coater, bar coater, knife coater and spray coater. Alternatively, the PSA composition can be applied by impregnation, a curtain coating method, etc.

From the standpoint of accelerating the crosslinking reaction and increasing the productivity, the PSA composition is preferably dried with heat. The drying temperature can be, for instance, about 40 °C to 120 °C, or usually preferably about 60 °C to 100 °C. After dried, the PSA composition may be aged for purposes such as adjusting the migration of components in the PSA layer and allowing the crosslinking reaction to progress, and relieving deformation possibly present in the support substrate and PSA layer, etc.

The thickness of the PSA layer is not particularly limited and can be, for instance, 100 $\mu$m or less (typically 2 $\mu$m to 100 $\mu$m). From the standpoint of minimizing peel strength increase and of the anti-residue properties, etc., usually, the thickness of the PSA layer is suitably 30 $\mu$m or less, preferably 20 $\mu$m or less, or more preferably 15 $\mu$m or less. From the standpoint of the tight adhesion to the adherend surface, the thickness of the PSA layer is usually suitably 3 $\mu$m or greater, preferably 5 $\mu$m or greater, or more preferably 7 $\mu$m or greater.

The thickness (typically the combined thickness of the PSA layer and support substrate) of the surface protection sheet disclosed herein is not particularly limited and can be, for instance, 400 $\mu$m or less. From the standpoint of the conformability to the adherend surface contour, etc., the thickness of the surface protection sheet is usually suitably 100 $\mu$m or less, preferably 70 $\mu$m or less, more preferably 55 $\mu$m or less, or yet more preferably less than 50 $\mu$m. The thickness of the surface protection sheet can be, for instance, 15 $\mu$m or greater. From the standpoint of the strength and handling properties, it is suitably 25 $\mu$m or greater, preferably 30 $\mu$m or greater, or more preferably 35 $\mu$m or greater.

The PSA layer of the surface protection sheet disclosed herein has an ethyl acetate-insoluble portion (gel fraction) of, but not particularly limited to, 60 % by weight or greater. This allows for adjustment of the peel strength of the surface protection sheet to a suitable range. From the standpoint of the anti-residue properties, the gel fraction of the PSA layer is preferably 70 % by weight or greater, more preferably 80 % by weight or greater, or yet more preferably 85 % by weight or greater. The gel fraction of the PSA layer can be adjusted, for instance, by the composition of the base polymer, by whether or not a crosslinking agent is used and its amount used if any, by the type of surfactant and its amount used, by whether a chain transfer agent is used or not and its amount used if any, and so on. The maximum gel fraction is theoretically 100 % by weight.

Here, the gel fraction of the PSA layer can be determined by wrapping a measurement sample weighing W1 with a porous tetrafluoroethylene resin sheet and suspending the resultant in ethyl acetate at room temperature for one week, subsequently drying the measurement sample, measuring the weight W2 of its ethyl acetate-insoluble portion, and substituting W1 and W2 into the following equation:

$$\text{gel fraction (\%)} = \text{W2/W1} \times 100.$$

More specifically, the gel fraction can be measured by the following method:

In particular, a measurement sample weighing approximately 0.1 g is wrapped into a pouch with a porous tetrafluoroethylene resin sheet of 0.2 $\mu$m average pore diameter, and the opening is tied with twine. The weight of the wrapping (the combined weight of the porous tetrafluoroethylene resin sheet and the twine) Wa (mg) is measured in advance. The weight of the pouch (the combined weight of the PSA and the wrapping) Wb (mg) is measured. The pouch is placed in a screw vial of volume 50 mL (one screw vial used for each pouch), and the screw vial is filled with ethyl acetate. This is set still at room temperature (typically at 23 °C) for seven days, and the pouch is then removed and allowed to dry at 120 °C for two hours. The weight Wc (mg) of the pouch after dried is measured. The gel fraction of the PSA can be determined by substituting the Wa, Wb and Wc into the following:

$$\text{Gel fraction (\%)} = (\text{Wc} - \text{Wa})/(\text{Wb} - \text{Wa}) \times 100$$

As the porous tetrafluoroethylene resin sheet, trade name NITOFLON® NTF1122 available from Nitto Denko Corporation or an equivalent product can be used.

The PSA layer of the surface protection sheet disclosed herein has a weight average molecular weight (Mw) of its ethyl acetate-soluble portion (sol fraction) of, but not particularly limited to, preferably $3 \times 10^5$ to $3 \times 10^6$ or more preferably $5 \times 10^5$ to $2.5 \times 10^6$. When the Mw of the sol fraction is far smaller than $3 \times 10^5$, the PSA layer may have insufficient cohesiveness, likely causing leftover adhesive residue and peel strength increase. On the other hand, when the Mw of the sol fraction is far larger than $3 \times 10^6$, the adhesion to the adherend surface tends to degrade.

Here, the Mw of the sol fraction refers to the weight average molecular weight based on standard polystyrene determined by gel permeation gas chromatography (GC) analysis of a measurement sample (typically the sol fraction). In particular, the Mw of the sol fraction is measured by the following method.

[Measurement Method for Weight Average Molecular Weight (Mw)]

PSA is suspended in ethyl acetate at room temperature for 7 days to dissolve its soluble portion. The extract of the soluble portion is allowed to dry to obtain a measurement sample. The measurement sample may also be obtained, for instance, by allowing the polymer dissolved in ethyl acetate during the gel fraction measurement to dry at room temperature. The measurement sample is dissolved again in tetrahydrofuran (THF) to prepare a 0.1 wt. % sample solution in THF. The THF solution is filtered through a membrane filter of 0.45 $\mu$m average pore diameter to obtain a filtrate (sample solution for molecular weight measurement). With respect to the filtrate, the Mw based on standard polystyrene is determined by a GPC system. As the GPC system, model name HLC-8320 GPC available from Tosoh Corporation can be used. The measurement conditions can be as follows:

Columns: TSK gel GMH-H(S) x 2
Column size: 7.8 mm LD. x 300 mm
Detector: differential refractometer
Eluent: THF
Flow rate: 0.6 mL/min
Measurement temperature: 40 °C
Sample injection volume: 100 $\mu$L

Several working examples relating to the present invention are described below, but the present invention is not intended to be limited to these examples. In the description below, "parts" and "%" are by weight unless otherwise specified. The amounts of the respective materials used are based on active ingredients unless otherwise noted.

The respective properties in the following description were measured or evaluated as described next.

[Measurement Method for Peel Strength to Itself]

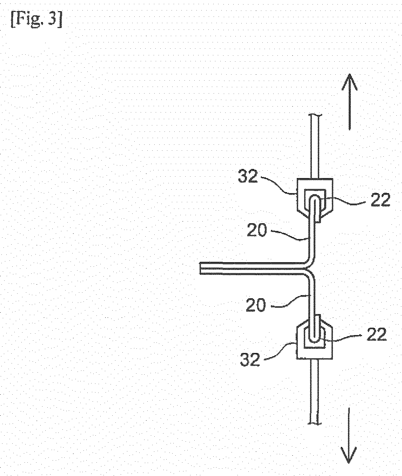

The PSA sheet according to each Example was cut to a strip of a 25 mm wide by 160 mm long size. As shown in Fig. 2, the strip was folded over in the length direction so that a 30 mm long segment of the PSA layer 2 from the first end 20A of the length direction comes on the inside (with the support substrate 1 on the outside) and press-bonded to form a hem (folded-over section) 22. Two such test pieces 20 were prepared. The two test pieces were arranged so that the two PSA layers 2 faced each other with their two second ends 20B lined up, and were then press-bonded with a 2 kg rubber roller (specified in JIS Z0237) moved back and forth once (bonding area 25 mm by 100 mm). As shown in Fig. 3, hem 22 was gripped by a chuck 32 of a universal tensile tester. After one minute from the press-bonding, at a tensile speed of 0.3 m/min and a peel angle of 180°, the two test pieces 20 and 20 were peeled apart and peel strength (N/25mm) was measured for this. The measurement was carried out in a standard environment at 23 °C, 50 % RH.

[Measurement Method for Initial Peel Strength ($S_A$)]

The PSA sheet according to each Example was cut to a strip of a 25 mm wide by 100 mm long size to prepare a test piece. The adhesive face of the test piece was press-bonded to a stainless steel plate (SUS430BA plate) as the adherend with a 2 kg rubber roller (specified in JIS Z0237) moved back and forth once. The sample was left standing in the standard environment at 23 °C, 50 % RH. Subsequently, in the same standard environment, using a universal tensile tester, at a tensile speed of 30 m/min and a peel angle of 180°, initial peel strength ($S_A$) (N/25mm) was measured.

[Measurement Method for Aged Peel Strength ($S_B$)]

The PSA sheet according to each Example was cut to a strip of a 25 mm wide by 100 mm long size to prepare a test piece. The adhesive face of the test piece was press-bonded to a stainless steel plate (SUS430BA plate) as the adherend with a 2 kg rubber roller (specified in JIS Z0237) moved back and forth once. The sample was left standing in an environment at 70 °C for 168 hours and then in a standard environment at 23 °C, 50 % RH for 6 hours. Subsequently, in the same standard environment, using a universal tensile tester, at a tensile speed of 30 m/min and a peel angle of 180°, aged peel strength ($S_B$) (N/25mm) was measured.

[Peel Strength Ratio ($S_B/S_A$)]

From the resulting initial peel strength ($S_A$) and aged peel strength ($S_B$), the peel strength ratio ($S_B/S_A$) was determined.

[Evaluation of Ease of Application]

Using a painted plate having a urethane-based clear coat layer on the surface (available from Nippon Testpanel Co., Ltd.), the PSA sheet according to each Example was evaluated for its ease of application to the painted plate. The urethane-based clear coat layer had been formed by painting a steel plate with a two-liquid-type urethane-based clear coat (product name RETAN PG ECO HS CLEAR available from Kansai Paint Co., Ltd.) with an acrylic polyol resin and a polyisocyanate resin to be mixed for use.

In particular, the PSA sheet according to each Example was cut to a 300 mm by 400 mm size to prepare a test piece. Imitating an application failure of the surface protection sheet, the test piece was folded over with the PSA layer on the inside and left standing for 3 minutes. Subsequently, the test piece was unfolded by hand peeling and press-bonded to the adherend with a hand-held roller. The applied test piece was visually inspected and the ease of application was evaluated based on the following two grades:

   G (good): No wrinkling was observed in the test piece.
   P (poor): Wrinkling was observed in some areas of the test piece.

[Evaluation of Ease of Removal]

Using the painted plate with the urethane-based clear coat layer on the surface (available from Nippon Testpanel Co., Ltd.; the same as the one used in evaluating the ease of application) as the adherend, the PSA sheet according to each Example was evaluated for its ease of removal from the painted plate. In particular, the sample bonded on the adherend in the ease of application test was cut to 75 mm by 150 mm. The cut sample was placed and processed in a sunshine weather meter (model name S80H available from Suga Test Instruments, Co., Ltd.). The conditions of the process are as follows:

(Process Conditions)

Black panel temperature: 63 °C
Rain: repeating a cycle of 18 minute water spray during 120 minutes of irradiation
Time of process: 500 hours

The processed sample was removed from the weather meter and stored in the standard environment at 23 °C, 50 % RH for 6 hours. Subsequently, the test piece was removed from the adherend by hand (tensile speed: 30 m/min; peel angle: 180°). The adherend surface after the removal was visually inspected and the presence of leftover adhesive residue was evaluated based on the following two grades:

G (good): No leftover adhesive residue was observed.
P (poor): Leftover adhesive residue was observed

[Evaluation of Ease of Reapplication]

Using the painted plate with the urethane-based clear coat layer on the surface (available from Nippon Testpanel Co., Ltd.; the same as the one used in evaluating the ease of application) as the adherend, the PSA sheet according to each Example was evaluated for its ease of reapplication to the painted plate. In particular, the PSA sheet according to each Example was cut to a 100 mm by 200 mm size to prepare a test piece. Imitating an application failure of the surface protection sheet, the test piece was press-bonded to the adherend with a hand-held roller and immediately removed by hand peeling. This procedure was repeated twice. Then, the test piece press-bonded to the adherend with the hand-held roller for the third time was visually inspected and the ease of reapplication was evaluated according to the following two grades:

G (good): No wrinkling was observed in the test piece.
P (poor): Wrinkling was observed in some areas of the test piece.

[Measurement Method for Tack Energy]

The PSA sheet according to each Example was cut to a 25 mm wide by 60 mm long size to prepare a test piece. Using a double-faced PSA tape, the test piece was fixed onto a glass slide (AZLAB glass slide) in a manner to expose the PSA layer. As the double-faced PSA tape, was used a double-faced PSA tape No. 5000NS (0.16 mm thick) available from Nitto Denko Corporation. The first adhesive face of the double-faced PSA tape was adhered almost entirely over the back face of the test piece and the second adhesive face was applied to the glass slide.
A probe tack test was carried out, using a probe tack tester (a tackiness tester available from RHESCA Co., Ltd.) in compliance with the ASTM D2979 standards. In particular, in an environment at a measurement temperature of 23 °C, the PSA layer surface of the test piece was brought into contact with a 5 mm diameter stainless steel probe (SUS430BA) under a contact load of 1 N for one second; and then peeled away at a speed of 30 mm/min while measuring the load applied on the probe vs. time.
Tack energy (mJ) was determined from the area defined by the time axis (i.e. the distance axis) and the load curve showing the change in load applied on the probe during the peeling. In particular, tack energy E (mJ) was calculated by multiplying the integral value (gf·sec) output by an analytical software RHESCA TAC II (Version 4.5.0zl) by 9.8 x 0.0005 (m/sec). The measurement was conducted ten times and their average value was determined.

[Measurement Method for Probe Tack]

Probe tack T (N) was determined as the average value of the peak values (maximum values) of the respective load curves obtained in the ten measurements in the tack energy measurement method above.

[Evaluation of Anti-Lifting Properties]

Using the painted plate with the urethane-based clear coat layer on the surface (available from Nippon Testpanel Co., Ltd.; the same as the one used in evaluating the ease of application) as the adherend, the PSA sheet according to each Example was evaluated for its anti-lifting properties. In particular, the PSA sheet according to each Example was cut to a 50 mm by 50 mm size to prepare a test piece. The test piece was press-bonded to the adherend with a hand-held roller. To intentionally create a situation that is likely to cause lifting of the test piece from the adherend, a PET film (10 mm by 10 mm, 25 $\mu$m thick) was placed between the test piece and adherend with an edge of the PET film extending to 3 mm from one side of the test piece.

The sample was placed and processed in a sunshine weather meter (model name S80H available from Suga Test Instruments, Co., Ltd.). The conditions of the process are as follows:

(Accelerated Weathering Test Conditions)

Black panel temperature: 63 °C
Rain: repeating a cycle of 18 minute water spray during 120 minutes of irradiation
Time of process: 72 hours

The processed sample was removed from the weather meter and stored in the standard environment at 23 °C, 50 % RH for 6 hours. Subsequently, the test piece was visually inspected for the presence of lifting from the painted plate and the anti-lifting properties of the PSA sheet was evaluated by the following three grades:

E (excellent): No lifting of the test piece was observed.
G (good): Some degree of lifting of the test piece was observed, but the length of lifted area was less than 10 mm.
P (poor): Lifting of the test piece was observed and the length of lifted area was at least 10 mm.

<Fabrication of Support Substrate>

A polyolefin resin material was melted and mixed in a film-molding machine and extruded from the T-die of the molding machine to form a 35 $\mu$m thick polyolefin resin film. The polyolefin resin material contained 70 parts homo propylene (product name NOVATEC PP FY4 available from Japan Polypropylene Corporation), 20 parts LLDPE (product name KERNEL KF380 available from Japan Polyethylene Corporation), and 10 parts rutile titanium dioxide (product name TIPAQUE CR-95 available from Ishihara Sangyo Kaisha, Ltd.). The film was subjected on one side to corona discharge treatment to fabricate a support substrate.

<Fabrication of PSA Sheets>

(Example 1)

A monomer mixture was mixed with 2 parts surfactant and 150 parts water, with the monomer mixture being formed of 56 parts 2-ethylhexyl acrylate (2EHA), 42 parts n-butyl methacrylate (BMA) and 2 parts acrylic acid (AA). The resulting mixture was emulsified with an emulsifying machine (homo mixer) under nitrogen flow to prepare a starting monomer emulsion. As the surfactant, was used polyoxyethylene-1-(allyloxymethyl) alkyl ether ammonium sulfate (product name AQUALON KH-1025 available from Dai-ichi Kogyo Seiyaku Co., Ltd.).

To a reaction vessel equipped with a thermometer, nitrogen inlet, condenser and stirrer, the emulsion was placed and heated with stirring to a liquid temperature of 50 °C under nitrogen flow. To this, was added as a polymerization initiator 0.03 part 2,2'-azobis(2-methylpropionamidine) dihydrochloride (product name V-50 available from Wako Pure Chemical Industries, Ltd.). The reaction mixture was allowed to undergo polymerization for 5 hours while keeping the liquid temperature around 50 °C. To the resulting polymerization reaction mixture, ammonia water was added to adjust the pH to approximately 8. A water dispersion of an acrylic polymer was thus prepared. The acrylic polymer had an average particle diameter of 0.14 $\mu$m, measured with a particle size analyzer (model name LS 13 320 available from Beckman Coulter, Inc.; wet method). The Tg of the acrylic polymer is -37 °C, determined from the monomer composition.

To 100 parts non-volatiles in the water dispersion, was mixed as an oxazoline-based crosslinking agent 2 parts EPOCROS WS-500 (available from Nippon Shokubai Co., Ltd., oxazoline group-containing aqueous crosslinking agent, oxazoline equivalent: 220 g·solid/eq) to prepare a PSA composition according to this example. In the PSA composition, the number of oxazoline equivalents in the aqueous crosslinking agent was 0.33 relative to 1 carboxy equivalent in the acrylic polymer.

To one face (the corona discharge treated face) of the support substrate, the PSA composition was applied to a thicknesses of 10 $\mu$m after dried. This was dried at 80 °C for 5 minutes and aged at 50 °C for two days to fabricate PSA sheet according to this example. The resulting PSA sheet was subjected to the measurements and tests described above (The same applies to the following Examples). The results are shown in Table 2. As shown in Table 2, the PSA sheet according to this example had a peel strength to itself of 1.8N/25mm and a peel strength ratio ($S_B/S_A$) value of 3.0. The probe tack was 3.4 N and the tack energy was 0.41 mJ.

(Example 2)

In the preparation of the PSA composition according to Example 1, in place of the 2 parts oxazoline-based crosslinking agent, was used 4 parts isocyanate-based crosslinking agent available from DIC Corporation, trade name BURNOCK DNW5500 (isocyanate group-containing aqueous crosslinking agent). Otherwise, in the same manner as Example 1, a PSA sheet according to this Example was obtained. As shown in Table 2, the PSA sheet had a peel strength to itself of 2.0 N/25mm at a peel strength ratio ($S_B/S_A$) of 3.4, a probe tack of 3.2 N and a tack energy of 0.34 mJ.

(Example 3)

In the preparation of the PSA composition according to Example 1, no crosslinking agent was used in this Example. Otherwise, in the same manner as Example 1, a PSA sheet according to this Example was obtained. As shown in Table 2, the PSA sheet had a peel strength to itself of 3.3 N/25mm, a probe tack of 4.3 N and a tack energy of 0.67 mJ. The peel strength ratio ($S_B/S_A$) was not determined because cohesive failure occurred over a large area of the PSA layer in the aged peel strength ($S_B$) measurement.

(Example 4)

In the preparation of the PSA composition according to Example 1, in place of the 2 parts oxazoline-based crosslinking agent, was used 6 parts carbodiimide-based crosslinking agent available from Nisshinbo Chemical Inc., trade name CARBODILITE V-02 (carbodiimide group-containing aqueous crosslinking agent). Otherwise, in the same manner as Example 1, a PSA sheet according to this Example was obtained. As shown in Table 2, the PSA sheet had a peel strength to itself of 2.1 N/25mm at a peel strength ratio ($S_B/S_A$) of 5.6, a probe tack of 3.5 N and a tack energy of 0.28 mJ.

(Example 5)

In toluene, were dissolved 90 parts polyisobutylene (product name OPPANOL B-80 available from BASF Corporation), 10 parts polyisobutylene (product name OPPANOL B-12SFN available from BASF Corporation) and 0.2 part p-tert-octylphenol resin (product name DUREZ 19900 available from Sumitomo Durez Co., Ltd.) to prepare a PSA composition at 12 % NV. Using this PSA composition, but otherwise in the same manner as Example 1, a PSA sheet according to this Example was obtained. As shown in Table 2, the PSA sheet had a peel strength to itself of 7.8 N/25mm at a peel strength ratio ($S_B/S_A$) of 2.3, a probe tack of 2.4 N and a tack energy of 0.16 mJ.

[Table 2]

Table 2

| | | | | Ex. 1 | Ex. 2 | Ex 3 | Ex. 4 | Ex. 5 |
|---|---|---|---|---|---|---|---|---|
| Support substrate | Composition (parts) | Polyolefin | PP | 70 | 70 | 70 | 70 | 70 |
| | | | LLDPE | 20 | 20 | 20 | 20 | 20 |
| | | Inorganic powder | TiO$_2$ | 10 | 10 | 10 | 10 | 10 |
| Water dispersion | Monomer compositions (parts) | 2EHA | | 56 | 56 | 56 | 56 | Polyisobutylene-based PSA composition |
| | | BMA | | 42 | 42 | 42 | 42 | |
| | | AA | | 2 | 2 | 2 | 2 | |
| | Surfactant (parts) | | | 2 | 2 | 2 | 2 | |
| | Polymerization initiator (parts) | | | 0.03 | 003 | 0.03 | 003 | |
| PSA composition | Composition | Water dispersion (paarts) | | 100 | 100 | 100 | 100 | |
| | | Crosslinking agent | Type (parts) | o-1 | i-1 | - | c-1 | |
| | | | | 2 | 4 | - | 6 | |
| PSA layer | Gel fraction (%) | | | 86 | 94 | 80 | 100 | n/d |
| Evaluation | Peel strength to itself (0.3 m/min) (N/25mm) | | | 18 | 20 | 3.3 | 2.1 | 78 |
| | Peel strength to SUS (30 m/min) | Initial ($S_A$)(N/25mm) | | 2.1 | 2.0 | 11 | 3.6 | 2.3 |
| | | Aged ($S_B$) (N/25mm) | | 6.2 | 6.7 | Cohesive failure | 20 | 54 |
| | | Peel strength ratio ($S_B/S_A$) | | 3 | 3.4 | - | 5.6 | 2.3 |
| | Probe tack(N) | | | 34 | 3.2 | 43 | 3.5 | 2.4 |
| | Tack energy (mJ) | | | 0.41 | 0.34 | 0.67 | 0.28 | 0.16 |
| | Tack energy/probe tack | | | 0.12 | 0.11 | 0.16 | 0.08 | 007 |
| | Ease of procedures | Ease of application | | G | G | G | G | P |
| | | Ease of removal | | G | G | P | P | G |
| | | Ease of reapplication | | G | G | P | G | G |

Crosslinking agents o-1: Oxazoline-based crosslinking agent, trade name EPOCROS WS-500
i-1: Isocyanate-based crosslinking agent, trade name BARNOC DNW5500
c-1: Carbodiimide-based crosslinking agent, trade name CARBODILITE V-02

As shown in Table 2, with respect to the PSA sheets of Examples 1 and 2 with peel strength ratios ($S_B/S_A$) at or below 5 and peel strength to itself at or below 5 N/25mm, both the application and removal were easy to carry out. They also performed well in terms of the ease of reapplication.

On the other hand, with respect to the PSA sheet of Example 4 with a peel strength ratio ($S_B/S_A$) above 5, leftover adhesive residue was observed in the adherend surface after its removal. Also, in view of the great deal of removal work required because of its excessively high aged peel strength ($S_B$), the ease of removal of the PSA sheet of Example 4 was found low. With respect to the PSA sheet of Example 5 which was too high in peel strength to itself, wrinkling was observed in the test piece applied on the adherend. With respect to the PSA sheet of Example 5, when the PSA layer was closely inspected after unfolded by hand peeling in the ease of application test above, it was found that in the peeled area, a PSA layer segment on one side was separated from the support substrate and transferred onto the PSA layer segment on the other side. This is thought to have caused the wrinkling. The PSA sheet of Example 3 suffered cohesive failure after aged, thereby revealing its poor anti-residue properties. It also performed poorly in terms of the ease of reapplication.

(Example 6)

Was used a monomer mixture formed of 69 parts 2EHA, 19 parts methyl methacrylate (MMA), 10 parts isobornyl acrylate (IBXA) and 2 parts AA. The amount of the surfactant (KH-1025) was changed to 3 parts. Otherwise, in the same manner as Example 1, an aqueous acrylic polymer dispersion according to this example was prepared. The acrylic polymer had an average particle diameter of 0.16 μm. The Tg of the acrylic polymer is -36 °C, determined from the composition of the monomer mixture.

To 100 parts non-volatiles in the aqueous dispersion, was mixed 3 parts oxazoline-based crosslinking agent (WS-500) to prepare a PSA composition according to this Example. In this PSA composition, the number of oxazoline equivalents in the crosslinking agent was 0.49 relative to 1 carboxy equivalent in the acrylic polymer.

Using the aqueous dispersion, but otherwise in the same manner as Example 1, a PSA sheet according to this Example was obtained. The resulting PSA sheet was subjected to measurements and evaluations by the aforementioned methods (The same applies to the Examples described below). The results are shown in Table 3. As shown in Table 3, the PSA sheet according to this example had a peel strength to itself of 4.0 N/25mm at a peel strength ratio ($S_B/S_A$) of 2.0, a probe tack of 2.9 N and a tack energy of 0.18 mJ.

(Example 7)

Was used a monomer mixture formed of 70 parts 2EHA, 20 parts MMA, 8 parts isopropylacrylamide (NIPAM) and 2 parts AA. The amount of the surfactant (KH-1025) was changed to 3 parts. Otherwise, in the same manner as Example 1, an aqueous acrylic polymer dispersion according to this example was prepared. The acrylic polymer had an average particle diameter of 0.13 μm. The Tg of the acrylic polymer is -36 °C, determined from the composition of the monomer mixture.

Using the aqueous dispersion, but otherwise in the same manner as Example 1, a PSA sheet according to this Example was obtained. As shown in Table 3, this PSA sheet had a peel strength to itself of 1.9 N/25mm at a peel strength ratio ($S_B/S_A$) of 3.0, a probe tack of 3.3 N and a tack energy of 0.19 mJ.

(Example 8)

Was used a monomer mixture formed of 70 parts 2EHA, 23 parts MMA, 5 parts acryloylmorpholine (ACMO) and 2 parts AA. The amount of the surfactant (KH-1025) was changed to 3 parts. Otherwise, in the same manner as Example 1, an aqueous acrylic polymer dispersion according to this example was prepared. The acrylic polymer had an average particle diameter of 0.13 μm. The Tg of the acrylic polymer is -37 °C, determined from the composition of the monomer mixture.

To 100 parts non-volatiles in the aqueous dispersion, was mixed 1 part oxazoline-based crosslinking agent (WS-500) to prepare a PSA composition according to this Example. In this PSA composition, the number of oxazoline equivalents in the crosslinking agent was 0.16 relative to 1 carboxy equivalent in the acrylic polymer

Using the aqueous dispersion, but otherwise in the same manner as Example 1, a PSA sheet according to this Example was obtained. As shown in Table 3, this PSA sheet had a peel strength to itself of 2.5 N/25mm at a peel strength ratio ($S_B/S_A$) of 2.8, a probe tack of 3.3 N and a tack energy of 0.21 mJ.

[Table 3]

Table 3

| | | | | Ex 6 | Ex. 7 | Ex. 8 |
|---|---|---|---|---|---|---|
| Support substrate | Composition (parts) | Polyolefin | PP | 70 | 70 | 70 |
| | | | LLDPE | 20 | 20 | 20 |
| | | Inorganic powder | $TiO_2$ | 10 | 10 | 10 |
| Water dispersion | Monomer composition (parts) | 2EHA | | 69 | 70 | 70 |
| | | MMA | | 19 | 20 | 23 |
| | | IBXA | | 10 | | |
| | | NIPAM | | - | 8 | |
| | | ACMO | | - | | 5 |
| | | AA | | | 2 | 2 |
| | Surfactant (parts) | | | 3 | 3 | 3 |
| | Polymerization initiator (parts) | | | 0.03 | 0.03 | 003 |
| PSA composition | Composition | Water dispersion (parts) | | 100 | 100 | 100 |
| | | Crosslinking agent | Type (parts) | o-1 | o-1 | o-1 |
| | | | | 3 | 2 | 1 |
| PSA layer | Gel fraction (%) | | | 93 | 92 | 84 |
| Evaluations | Peel strength to itself (0.3m/min) (N/25mm) | | | 4.0 | 1.9 | 2.5 |
| | Peel strength to SUS (30 m/min) | Initial ($S_A$) (N/25mm) | | 5.0 | 1.2 | 2.1 |
| | | Aged ($S_a$) (N/25mm) | | 9.8 | 3.6 | 5.8 |
| | | Peel strength ratio ($S_P/S_A$) | | 2.0 | 3.0 | 2.8 |
| | Probe tack (N) | | | 2.9 | 3.3 | 3.3 |
| | Tack energy (mJ) | | | 0.18 | 0.19 | 0.21 |
| | Tack energy/probe tack | | | 0.06 | 0.06 | 0.06 |
| | Ease of procedures | Ease of application | | G | G | G |
| | | Ease of removal | | G | G | G |
| | | Ease of reapplication | | G | G | G |
| | Anti-lifting properties | | | E | E | G |
| Crosslinking agent o-1: Oxazofine-based crosslinking agent, trade name EPOCROS WS-500 | | | | | | |

As shown in Table 3, the PSA sheets of Examples 6 to 8 were all found easy to apply, remove and reapply. All of these PSA sheets exhibited good anti-lifting properties. In particular, the PSA sheets of Examples 6 and 7 were superior in anti-lifting properties.

Although specific embodiments of the present invention have been described in detail above, these are merely for illustrations and do not limit the scope of the claims. The art according to the claims includes various modifications and changes made to the specific embodiments illustrated above.

[Industrial Applicability]

The surface protection sheet according to the present invention is preferable when used in an embodiment where it is adhered to an adherend (an article to be protected) to serve a role to protect the surface of the adherend from damages and removed from the paint film after its protective role is over, with examples of the paint film including metal plates (steel plates, stainless steel plates, aluminum plates, etc.), painted metal plates having paint films on the surfaces (e.g. painted steel plates used for house building materials, other building materials, vehicles such as watercrafts, railroad vehicles and automobiles, etc.), synthetic resin plates, articles molded from these, and so on. It can be preferably used for applications where it is adhered to paint films of objects to be protected (articles having paint films formed by the paint works, e.g. metal plates such as steel plates and molded articles thereof) and protects the paint films from damage such as scratches and dirt, with the objects having been provided with paint works using paints of various compositions such as acrylic paints, polyester-based paints, alkyd-based paints, melamine-based paints, urethane-based paints, acid-epoxy crosslinked paints, and their composites (e.g. acrylic melamine-based paints, alkyd melamine-based paints, etc.).

[Reference Signs List]

1: support substrate
1A: first face (front face)
1B: second face (back face)
2: PSA layer
2A: adhesive face
10: surface protection sheet
20: test piece
20A: first end
20B: second end
22: hem
32:chuck

**Claims**

1. A surface protection sheet that comprises a pressure-sensitive adhesive layer and a support substrate supporting the pressure-sensitive adhesive layer, the surface protection sheet having
a peel strength ($S_A$) after adhered to a stainless steel plate and stored at 23 °C for 30 minutes, and a peel strength ($S_B$) after adhered on a stainless steel plate and stored at 70 °C for 168 hours, at an peel strength ($S_B$) to peel strength ($S_A$) ratio ($S_B/S_A$) of 5 or less; and
a peel strength to itself of 5 N/25mm or less when the pressure-sensitive adhesive layer is adhered to itself and peeled apart after one minute.

2. The surface protection sheet according to Claim 1, wherein the peel strength ($S_A$) is 10 N/25mm or less and the peel strength ($S_B$) is 10 N/25mm or less.

3. The surface protection sheet according to Claim 1 or 2, having a tack energy of 0,60 mJ or less.

4. The surface protection sheet according to any one of Claims 1 to 3, wherein the pressure-sensitive adhesive layer is formed with a crosslinked base polymer.

5. The surface protection sheet according to any one of Claims 1 to 4, wherein the pressure-sensitive adhesive layer comprises an acrylic polymer as its base polymer.

6. The surface protection sheet according to any one of Claims 1 to 5, wherein the pressure-sensitive adhesive layer is formed from a water-dispersed pressure-sensitive adhesive composition comprising an acrylic polymer and a crosslinking agent.

7. The surface protection sheet according to Claim 6, wherein the crosslinking agent comprises one, two or more species selected from a group consisting of oxazoline-based crosslinking agents, isocyanate-based crosslinking agents and epoxy-based crosslinking agents.

[Fig. 1]

2A

1A

2

1

1B

10

[Fig. 2]

20A

22

2A

2

20

20B

100mm

1

[Fig. 3]

## INTERNATIONAL SEARCH REPORT

| International application No. |
| --- |
| PCT/JP2014/076265 |

A.   CLASSIFICATION OF SUBJECT MATTER
*C09J7/02*(2006.01)i, *C09J11/06*(2006.01)i, *C09J133/00*(2006.01)i

According to International Patent Classification (IPC) or to both national classification and IPC

B.   FIELDS SEARCHED

Minimum documentation searched (classification system followed by classification symbols)
C09J7/02, C09J11/06, C09J133/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-132371 A  (Dainippon Printing Co., Ltd.),<br>07 July 2011 (07.07.2011),<br>claims; paragraphs [0006] to [0007], [0041];<br>paragraph [0060], table 2, example 6,<br>referential example 4; paragraphs [0064] to [0067]<br>(Family: none) | 1-7<br>1-7 |
| X<br>Y | JP 2013-159662 A  (Nitto Denko Corp.),<br>19 August 2013 (19.08.2013),<br>claims; paragraphs [0120] to [0144], table 2<br>& WO 2013/114724 A1 | 1-7<br>1-7 |

[X]   Further documents are listed in the continuation of Box C.      [ ]   See patent family annex.

| | |
| --- | --- |
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
| --- | --- |
| Date of the actual completion of the international search<br>16 December 2014 (16.12.14) | Date of mailing of the international search report<br>06 January 2015 (06.01.15) |
| Name and mailing address of the ISA/<br>Japan Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/076265

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-70748 A  (DIC Corp.),<br>02 April 2010 (02.04.2010),<br>paragraphs [0001], [0023]<br>& WO 2010/016403 A1      & KR 10-2011-0027721 A<br>& CN 102112305 A           & TW 201008772 A | 1-7 |
| A | JP 2012-12442 A  (Nitto Denko Corp.),<br>19 January 2012 (19.01.2012),<br>claim 1; paragraph [0113], table 1<br>& US 2013/0115406 A1      & EP 2589632 A1<br>& WO 2012/001899 A1      & CN 102959029 A | 1-7 |
| A | JP 2010-84034 A  (Dainippon Printing Co., Ltd.),<br>15 April 2010 (15.04.2010),<br>claims; paragraph [0045], table 1<br>(Family: none) | 1-7 |
| A | JP 2009-39975 A  (Lintec Corp.),<br>26 February 2009 (26.02.2009),<br>claim 11; paragraph [0034]; paragraph [0046],<br>table 1<br>(Family: none) | 1-7 |
| A | JP 2009-24130 A  (Lintec Corp.),<br>05 February 2009 (05.02.2009),<br>claim 4; paragraph [0041], table 1<br>(Family: none) | 1-7 |
| A | JP 2009-1673 A  (Nitto Denko Corp.),<br>08 January 2009 (08.01.2009),<br>claims; paragraph [0083], table 1<br>& US 2008/0281038 A1      & TW 200909548 A | 1-7 |
| A | JP 2008-222830 A  (Nitto Denko Corp.),<br>25 September 2008 (25.09.2008),<br>claims; paragraph [0109], table 1<br>(Family: none) | 1-7 |
| P,A | JP 2014-28936 A  (The Nippon Synthetic Chemical Industry Co., Ltd.),<br>13 February 2014 (13.02.2014),<br>claims; paragraph [0002]; paragraph [0129],<br>table 1, example 4<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013224665 A
- JP H673352 B
- JP 2007532744 A

- JP 2012025921 A
- JP H10114887 B

**Non-patent literature cited in the description**

- Polymer Handbook. John Wiley & Sons, Inc, 1989